# EUROPÄISCHE PATENTSCHRIFT

(11) **EP 1 742 978 B1**
(45) Veröffentlichungstag und Bekanntmachung des Hinweises auf die Patenterteilung: **29.10.2008**
(21) Anmeldenummer: 05734872.4
(22) Anmeldetag: 02.04.2005
(51) Int. Cl.: C08G 18/40, C08G 18/76, C08G 18/71

(54) **VERFAHREN ZUR HERSTELLUNG VON POLYURETHAN-SCHAUMSTOFFEN**
METHOD FOR THE PRODUCTION OF POLYURETHANE FOAM MATERIALS
PROCEDE DE PRODUCTION DE MOUSSES DE POLYURETHANNE

(30) Priorität: 05.04.2004 DE 102004017294
(43) Veröffentlichungstag der Anmeldung: 17.01.2007
(73) Patentinhaber: BASF SE, 67056 Ludwigshafen (DE)
(72) Erfinder: EMGE, Andreas, 49448 Lemförde (DE); BLEUEL, Elke, 01127 Dresden (DE); ZASCHKE, Bernd, 01561 Schönfeld (DE); SEIFERT, Holger, 49163 Bohmte (DE); MALOTKI, Peter, 49448 Lemförde (DE)
(86) Internationale Anmeldenummer: PCT/EP2005/003485
(87) Internationale Veröffentlichungsnummer: WO 2005/097863

(56) Entgegenhaltungen:
- EP-A- 0 316 788
- EP-A- 1 108 514
- WO-A-03/078496
- WO-A-20/04035650
- US-A- 4 125 505

## Beschreibung

Gegenstand der Erfindung ist ein Verfahren zur Herstellung von Polyurethan-Schaumstoffen, insbesondere Polyurethan-Hartschaumstoffen, durch Umsetzung von Polyisocyanaten mit Verbindungen mit mindestens zwei mit Isocyanatgruppen reaktiven Wasserstoffatomen, wobei die Polyolkomponente zu einem Teil oder vollständig aus Graftpolyolen besteht und lagerstabil ist.

Polyurethan-Hartschaumstoffe sind seit langem bekannt und werden vorwiegend zur Wärme- und Kälteisolation, z.B. in Kühlgeräten, in Warmwasserspeichern, in Fernwärmerohren oder im Bauwesen, beispielsweise in Sandwichelementen, eingesetzt. Eine zusammenfassende Übersicht über die Herstellung und Anwendung Polyurethan-Hartschaumstoffen findet sich beispielsweise im Kunststoff-Handbuch, Band 7, Polyurethane 1. Auflage 1966, herausgegeben von Dr. R. Vieweg und Dr. A. Höchtlen, 2. Auflage 1983, herausgegeben von Dr. Günter Oertel, und 3. Auflage 1993, herausgegeben von Dr. Günter Oertel, Carl Hanser Verlag, München, Wien.

Bei der technischen Herstellung von Polyurethan-Hartschaumstoffen, insbesondere von Sandwich-Elementen, oder der Herstellung von Kühlgeräten, ist die Aushärtung der Schaumstoffe von besonderer Bedeutung.

Durch schnellere Aushärtung und die damit verbundene Verkürzung der Entformzeiten wird die Kapazität der bestehenden Produktionslinien erhöht, ohne dass weitere Investitionen in Maschinentechnik erforderlich sind. Bei der Herstellung von Sandwich-Elementen erlaubt die schnellere Aushärtung eine schnellere Doppelbandgeschwindigkeit und damit einen höheren Output pro Zeiteinheit.

Im Stand der Technik sind eine Reihe von Möglichkeiten bekannt, die Entformzeiten zu senken.

So beschreibt DE19630787 Polyurethane mit einer verbesserten Aushärtung durch den Einsatz aminhaltiger Polyole.

CA 2135352 beschreibt Polyurethane mit gutem Entformungsverhalten durch Einsatz eines mit Saccharose gestarteten Polyols.

Gemäß JP 07082335 wird die Entformung durch den Einsatz eines Gemisches aus 1,3,5-Tris(3-aminopropyl)hexahydro-s-Triazin, Pentamethyldiethylentriamin, Bis(2-dimethylaminoethyl)ether als Katalysatoren verbessert.

Gemäß JP 2001158815 erreicht man eine gute Entformung durch den Einsatz eines Gemisches aus aromatischen Polyesteralkoholen mit einer Hydroxylzahl im Bereich zwischen 405-500 mgKOH/g und einer Funktionalität von 2 bis 3 und Polyetheralkoholen auf Basis von TDA und Propylenoxid und/oder Butylenoxid mit einer Hydroxylzahl zwischen 300 bis 450 mgKOH/g und einer Funktionalität von 3 bis 4.

Gemäß JP 10101762 wird eine gute Entformung durch ein Saccharose-Alkylenoxid-Polyol mit einer Molmasse größer 300 und einer Funktionalität größer 3 erreicht.

Gemäß JP 02180916 erzielt man eine gute Entformung durch ein aromatisches Polyesterol mit einer Funktionalität zwischen 2,2 und 3,6, und einer Hydroxylzahl zwischen 200 und 550 mgKOH/g, hergestellt durch Veresterung einer aromatischen Polycarbonsäure mit Diethylenglykol und einem trifunktionellem Alkohol.

Typischerweise wird also sowohl für Schaumstoffe zur Anwendung in Kühlgeräten als auch für Sandwichelemente entweder mit einer modifizierten Katalyse und/oder mit hochfunktionellen oder eigenreaktiven Amin-gestarteten Polyolen mit hoher Hydroxylzahl gearbeitet, um eine hohe Vernetzung und damit eine schnellere Aushärtung zu erzielen.

Durch die erhöhte Vernetzung verschlechtert sich häufig die Fliessfähigkeit der Reaktionsgemischs, so dass eine höhere Menge an Material erforderlich ist, um einen Hohlraum (z.B. ein Formwerkzeug oder ein Kühlschrankgehäuse zu füllen.

Es hat sich gezeigt, dass durch den zumindest teilweisen Einsatz von Polyolen, die Polymerisate aus olefinisch ungesättigten Monomeren, zumeist Acrylnitril und/oder Styrol, enthalten, sogenannter Graft-Polyole, Schaumstoffe mit einer guten Aushärtung und Entformbarkeit bei einem optimalen Fließverhalten sowie mit guten mechanischen Eigenschaften, insbesondere guter Druckfestigkeit, erhalten werden können. Es hat sich jedoch auch gezeigt, dass derartige, Graftpolyole enthaltende Polyolmischungen wenig lagerstabil sind.

Aufgabe der Erfindung war es, Polyurethan-Schaumstoffe, insbesondere geschlossenzellige Polyurethan-Hartschaumstoffe auf Basis einer lagerstabilen Polyolkomponente, die zu einem Teil oder vollständig aus Graftpolyolen besteht, bereitzustellen, die sich durch gute Aushärtung und Entformbarkeit bei einem optimalen Fließverhalten sowie gute mechanische Eigenschaften, insbesondere gute Druckfestigkeit, auszeichnen.

Als lagerstabil im Sinne der vorliegenden Erfindung wird verstanden, dass die Polyolkomponenten mindestens 2 Wochen bei 23°C stabil sind und keine Phasenseparation auftritt.

Die Aufgabe konnte überraschenderweise dadurch gelöst werden, dass die zur Herstellung der Schaumstoffe Graftpolyole nach Anspruch 1 eingesetzt werden. Es hat sich gezeigt, dass polare Graft-Polyole keine Phasenseparation zeigen.

Unter dem Begriff polar im Sinne der vorliegenden Erfindung wird verstanden, dass das Graftpolyol eine Dielektrizitätskonstante von mindestens 5,5 bei 23°C und 1000 Hz aufweist. Die Dielektrizitätskonstante wird dabei bestimmt nach DIN 53483. Die Dielektrizitätskonstante ε' wird ermittelt aus der gemessen Kapazität Cₐ (mit Probe) und der Kapazität C₀ der Elektrodenanordnung an Luft (ε' = Cₐ/C₀).

Gegenstand der Erfindung sind Graft-Polyole, herstellbar durch in-situ Polymerisation von olefinisch ungesättigten Monomeren in einem Trägerpolyol in Anwesenheit eines Makromers mit mindestens einer olefinisch ungesättigten Gruppe im Molekül, dadurch gekennzeichnet, dass das Trägerpolyol eine Funktionalität von 2 bis 8, eine Hydroxylzahl im Bereich zwischen 100 und 800 mg koh/g und einen Gehalt an Ethylenoxideinheiten im Molekül von mindestens 30 Gew.-%, bezogen auf das Molekulargewicht des Polyols, aufweist.

Gegenstand der Erfindung ist somit ein Verfahren zur Herstellung von Polyurethan-Schaumstoffen, insbesondere Polyurethan-Hartschaumstoffen, die vorzugsweise geschlossenzellig sind, durch Umsetzung von
a) Polyisocyanaten mit
b) Verbindungen mit mindestens zwei mit Isocyanatgruppen reaktiven Wasserstoffatomen in Gegenwart von
c) Katalysatoren
d) Treibmitteln,
dadurch gekennzeichnet, dass die Verbindungen mit mindestens zwei mit Isocyanatgruppen reaktiven Wasserstoffatomen mindestens ein erfindungsgemäßes Graftpolyol enthält.

Das erfindungsgemäße Graft-Polyol hat eine Dielektrizitätskonstante bei 23°C und 1000 Hz von mindestens 5,5.

Die erforderliche Polarität der Graft-Polyole kann insbesondere erreicht werden, indem mindestens eine der zu ihrer Herstellung verwendeten Ausgangsstoffe, insbesondere das Trägerpolyol oder das Makromer, polar ist. Vorzugsweise sollten sowohl das Trägerpolyol als auch das Makromer polar sein.

Unter dem Trägerpolyol, auch als Carrierpolyol bezeichnet, wird das Polyol verstanden, in dem die in-situ Polymerisation der olefinisch ungesättigten Monomere durchgeführt wird. Polare Trägerpolyole haben eine Dielektrizitätskonstante nach IEC 60250 von mindestens 7,5, vorzugsweise zwischen 8 und 20, bei 23°C und 1000 Hz.

Unter dem Makromer werden polymere Verbindungen, die mindestens eine olefinisch ungesättigte Gruppe im Molekül aufweisen und die dem Trägerpolyol vor der Polymerisation der olefinisch ungesättigten Monomere zugesetzt werden, verstanden. Genauere Ausführungen zu diesen Verbindungen folgen unten. Polare Makromere haben eine Dielektrizitätskonstante nach DIN 53 483 von mindestens 6,0, vorzugsweise zwischen 7,5 und 12,0, bei 23°C und 1000 Hz.

Die erfindungsgemäßen Graftpolyole können in einer Menge bis zu 100 Gew.-% eingesetzt werden. Vorzugsweise erfolgt der Einsatz in einer Menge von 0,5 bis 70 Gew.-%, jeweils bezogen auf die Komponente b).

Bei der Herstellung von Kühlgeräten erfolgt der Einsatz der Graft-Polyole vorzugsweise in einer Menge von 3 Gew.-% bis 70 Gew.-%, besonders bevorzugt von 3 Gew.-% bis 50 Gew.-%, insbesondere in einer Menge von 3 Gew.-% bis 35 Gew.-%, jeweils bezogen auf das Gewicht der Komponente b).

Bei einer Menge von unter 3 Gew.-% sind die Effekte durch den Einsatz der Graft-Polyole nur noch schwach nachweisbar.

Bei der Herstellung von Sandwich-Elementen werden die Graft-Polyole vorzugsweise in einer Menge von 0,5 bis 35 Gew.-%, vorzugsweise auf 0,5 bis 25 Gew.-% und insbesondere 1 bis 20 Gew.-%, jeweils bezogen auf das Gewicht der Komponente b), eingesetzt.

Bei einem Gehalt an Graft-Polyolen unter etwa 0,5 Gew.-% ist keine Verbesserung mehr gegenüber herkömmlichen Polyurethan-Hartschaumstoffen festzustellen.

Die erfindungsgemäß eingesetzten Graftpolyole, häufig auch als Polymer-Polyole bezeichnet, sind Dispersionen von Polymeren, zumeist AcryInitril-Styrol-Copolymeren, in einem Polyetheralkohol.

Graftpolyole werden üblicherweise durch radikalische Polymerisation der olefinisch ungesättigten Monomere, vorzugsweise Acrylnitril, Styrol sowie gegebenenfalls weiterer Monomere, eines Makromers und eines Moderators unter Einsatz eines Radikal-Initiators, meist Azo- oder Peroxidverbindungen, in einem Polyetherol beziehungsweise Polyesterol, zumeist als Trägerpolyol bezeichnet, als kontinuierlicher Phase hergestellt.

Graftpolyole werden bevorzugt durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, analog den Angaben der deutschen Patentschriften 1111394, 1222669, 1152536 und 1152537, hergestellt.

Die für das erfindungsgemäße Verfahren eingesetzten Graft-Polyole werden, wie oben ausgeführt, unter Verwendung von polaren Trägerpolyolen, das heißt Polyolen mit einer Dielektrizitätskonstante ε' von mindestens 7,0 bei 23°C und 1000 Hz hergestellt. Diese Dielektrizitätskonstante kann bei Polyetheralkoholen üblicherweise dadurch erzielt werden, dass das Trägerpolyol einen Gehalt an Ethylenoxideinheiten von mindestens 30 Gew.-%, bezogen auf das Molekulargewicht des Polyols, aufweist.

Die für das erfindungsgemäße Verfahren eingesetzten Graftpolyole werden unter Verwendung von Trägerpolyolen hergestellt, wie sie bezüglich Funktionalität, Hydroxylzahl und Molekulargewicht üblicherweise zur Herstellung von Polyurethan-Hartschaumstoffen verwendet werden, die allerdings, wie ausgeführt, einen für Hartschaumanwendungen untypischen, erhöhten EO-Anteil aufweisen. Derartige Polyetheralkohole haben eine Funktionalität von 2 bis 8, eine Hydroxylzahl im Bereich zwischen 100 und 800 mgKOH/g und ein Molekulargewicht M_{w} zwischen 200 und 2500. Als Startsubstanzen werden mehrfunktionelle Alkohole, wie Glycerin, Trimethylolpropan oder Zuckeralkohole, wie Sorbit, Saccharose oder Glucose, aliphatische Amine, wie Ethylendiamin, oder aromatische Amine, wie Toluylendiamin (TDA), Diphenylmethandiamin (MDA) oder Gemische aus MDA und Polyphenylen-Polymethylen-Polyaminen eingesetzt. Als Alkylenoxide werden Propylenoxid oder Gemische aus Ethylenoxid und Propylenoxid eingesetzt. Derartige Graftpolyole haben zumeist eine Hydroxylzahl im Bereich zwischen 60 und 175 mgKOH/g bei einem Feststoffgehalt von 35 bis 60 Gew.-%.

Erfindungsgemäße Trägerpolyole mit der beschriebenen Dielektrizitätskonstanten können auch auf anderem Wege durch Einbau polarer Gruppen erhalten werden, z.B. Polyole enthaltend Carbonat- oder Acrylatgruppen.

Es ist auch möglich, als Trägerpolyole Gemische aus mindestens zwei Polyolen, insbesondere mindestens zwei Polyetheralkoholen, einzusetzen. Dabei ist es bevorzugt, dass die Mischung der Polyole polar ist. Es ist durchaus möglich, dass auch unpolare Polyole in der Mischung enthalten sind. Durch die Abmischung der Polyole kann die gewünschte Polarität der als Trägerpolyol eingesetzten Mischung eingestellt werden.

Um die Stabilität der Graft-Polyole zu gewährleisten, werden den Ausgangsverbindungen, wie ausgeführt, vor der Dosierung der ungesättigten Monomere Verbindungen mit ethylenisch ungesättigten Gruppen, sogenannte Makromere, zugesetzt. Wie ausgeführt, haben die Makromere ebenfalls vorzugsweise eine Dielektrizitätskonstante ε' nach DIN 53 483 von größer 6,0 bei 23°C und 1000 Hz.

Die Makromere, auch als Stabilisatoren bezeichnet, sind zumeist lineare oder verzweigte Polyetherole mit Molekulargewichten M_{w} ≥ 1000 g/mol, die mindestens eine zumeist endständige, reaktionsfähige olefinisch ungesättigte Gruppe enthalten. Die ethylenisch ungesättigte Gruppe kann über Reaktion mit ethylenisch ungesättigten Carbonsäuren und/oder Carbonsäure-Anhydriden, wie Maleinsäureanhydrid, Fumarsäure, Acrylat- und Methacrylat-Derivaten sowie ungesättigten Isocyanat-Derivaten, wie 3-Isopropenyl-1,1-dimethylbenzyl-isocyanate, Isocyanato-ethylmethacrylate, an ein bereits bestehendes Polyol eingefügt werden. Ein weiterer Weg ist die Herstellung eines Polyols durch Alkoxydation von Propylenoxid und Ethylenoxid unter Verwendung von Startmolekülen mit Hydroxylgruppen und einer ethylenischen Ungesättigtheit. Beispiele für solche Makromere sind in den Patenten US 4 390 645, US 5 364 906, EP 0 461 800, US 4997857, US 5358984, US 5990232, WO 01/04178 und US 6013731 beschrieben.

Erfindungsgemäß einsetzbare Makromere können ebenfalls durch Reaktion eines linearen oder verzweigten Polyetheralkohols oder Polyesteralkohols mit Molekulargewichten M_{w} ≥ 1000 g/mol mit einem mindestens difunktionellen Isocyanat wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten und anschließender Umsetzung mit einer Verbindung mit mindestens einer olefinisch ungesättigten Gruppe zu einem Stabilisator mit mindestens einer endständigen, reaktionsfähigen olefinisch ungesättigten Gruppe enthalten werden. Besonders bevorzugt für das Erreichen der erforderlichen Dielektrizitätskonstante sind hierbei Polyetherole mit einem wie oben beschriebenen erhöhten EO-Anteil.

Weitere für das erfindungsgemäße Verfahren einsetzbare Makromere sind polare Polymere, wie ethylenoxidreiche Hart- oder Weichschaumpolyetheralkohole, ausgehend von Starterverbindungen wie Sorbitol, Trimethylolpropan (TMP) oder Glycerin, Prepolymere aus ethylenoxidreichen Hart- oder Weichschaumpolyetheralkoholen mit TDI und/oder MDI, des weiteren Sulfonsäure- oder Sulfonatgruppenhaltige oder Acrylsäure- oder Acrylat-gruppenhaltige Polyole, Acrylsäure- oder Acrylatcopolymere oder -blockcopolymere, Polyesterole, ionische und nicht-ionische Blockcopolymere, die mindestens eine endständige, reaktionsfähige olefinische ungesättigte Gruppe enthalten. Die ethylenisch ungesättigte Gruppe kann über Reaktion mit Carbonsäure-Anhydriden, wie Maleinsäureanhydrid, Fumarsäure, Acrylat- und Methacrylat-Derivaten sowie Isocyanat-Derivaten, wie 3-Isopropenyl-1,1-dimethylbenzyl-isocyanat (TMI), Isocyanato-ethylmethacrylate, an ein polares Polymer eingefügt werden.

An Stelle von oder zusätzlich mit der Verwendung von ethylenoxidreichen Polyolen kann die erforderliche Dielektrizitätskonstante der Makromere auch durch den Einbau von polaren funktionellen Gruppen in die Makromere erfolgen. Dies kann beispielsweise durch Copolymerisation mit Verbindungen wie Imidazolen, Pyrrolidonen, Pyrazolen, Piperazinen, Pyrazinen, Pyridazinen, Benzimidazolen, Triazinen, Vinylaminen, Ethyleniminen, Acetaten, Acrylaten, Methacrylaten, Fumaraten, Vinylamiden, Purinen, Pyrimidinen, Pterinen, Asparaginsäure, Milchsäure, Peptide, Phenolen, Epoxiden, Aziridinen, Cellulose, Sacchariden, Oligosacchariden, Lignin, aromatischen, aliphatischen und araliphatischen Mono-, Oligo- und Poly-Carbonsäuren, aromatischen, aliphatischen und araliphatischen Mono-, Oligo- und Poly-Sulfonsäuren, aromatischen, aliphatischen und araliphatischen Amine, Polyisobutenaminen, Salzen von Sulfon- und Carbonsäuren erfolgen. Um Nebenreaktionen zu vermeiden, ist es bevorzugt, die funktionellen Gruppen der genannten Copolymere zu blockieren.

Während der radikalischen Polymerisation der olefinischen Monomere bei der Herstellung der Graftpolyole werden die Makromere mit in die Copolymerkette eingebaut. Dadurch bilden sich Blockcopolymere mit einem Polyether- und einen Polyacrylnitrilstyrol-Block, welche in der Grenzfläche von kontinuierlicher Phase und dispergierter Phase als Phasenvermittler wirken und das Agglomerieren der Graftpolyolpartikel unterdrücken. Der Anteil der Makromere beträgt üblicherweise 1 bis 35 Gew.-%, bezogen auf das Gesamtgewicht der zur Herstellung des Graftpolyols eingesetzten Monomere, bevorzugt 1 bis 15 Gew.-%.

Wie bereits ausgeführt, genügt es, wenn entweder nur das Makromer oder nur das Trägerpolyol polar ist. Vorzugsweise ist das Makromer polar, besonders bevorzugt sind sowohl das Makromer als auch das Trägerpolyol polar.

Zur Herstellung der erfindungsgemäß eingesetzten Graftpolyole werden üblicherweise Moderatoren, auch als Kettenüberträger bezeichnet, eingesetzt. Der Einsatz und die Funktion dieser Moderatoren wird beispielsweise in US 4,689,354 oder EP 0 365 986 beschrieben. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Graftpolyole beeinflusst. Der Anteil der Moderatoren beträgt üblicherweise 0,5 bis 25 Gew.-%, bezogen auf das Gesamtgewicht der zur Herstellung des Graftpolyols eingesetzten Monomere. Moderatoren, die üblicherweise zur Herstellung von Graftpolyolen eingesetzt werden, sind Alkohole, wie 1-Butanol, 2-Butanol, Isopropanol, Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und α-(Benzoyloxy)styren.

Zur Initiierung der radikalischen Polymersisation werden üblicherweise Peroxid- oder Azo-Verbindungen, wie Dibenzoyl peroxide, Lauroyl peroxide, t-Amylperoxy-2-ethylhexanoate, Di-t-butyl peroxide, Diisopropyl peroxide carbonate, t-Butyl peroxy-2-ethylhexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und di-t-butylperphthalate, 2,2'-Azobis(2,4-dimethyl-valereronitrile), 2,2'-Azobisisobutyronitrile (AIBN), Dimethyl-2,2'-azobisisobutyrate, 2,2'-Azobis(2-methylbutyronitrile (AMBN), 1,1'-Azobis(1-cyclohexanecarbonitrile) eingesetzt. Der Anteil der Initiatoren beträgt üblicherweise 0,1 bis 6 Gew.-%, bezogen auf das Gesamtgewicht der zur Herstellung des Graftpolyols eingesetzten Monomere.

Die radikalische Polymerisation zur Herstellung von Graftpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Graftpolyolen sind Temperaturen von 80 bis 140°C, bei einem Druck von Atmosphärendruck bis 15 bar.

Durch den Einsatz der erfindungsgemäßen Graftpolyole lassen sich PolyurethanSysteme herstellen, deren Polyolkomponente lagerstabil ist, so dass eine Verarbeitung, z.B. bei der Herstellung von Kühlgeräten, ohne permanentes Rühren während der Maschinenverschäumung ermöglicht werden kann. Dies ist bei Verwendung der bekannten, unpolaren Graftpolyole auf Basis von Weichschaum- oder Hartschaum-Trägerpolyolen nicht möglich.

Die erfindungsgemäßen Graftpolyole haben vorzugsweise eine Teilchengröße der Polymere von 0,1 µm bis 8 µm, vorzugsweise 0,2 µm bis 4 µm mit einem Maximum bei der Teilchengröße bei 0,2 bis 3 µm vorzugsweise bei 0,2 bis 2,0 µm. Der Feststoffgehalt der Graftpolyole liegt zumeist in einem Bereich von 10 bis 60 Gew.-%, bezogen auf das Polyol.

In einer weiteren bevorzugten Ausführungsform der erfindungsgemäß eingesetzten Graftpolyole ist die Teilchengrößenverteilung bimodal, das heißt, die Verteilungskurve der Teilchengröße weist zwei Maxima auf. Derartige Graftpolyole können beispielsweise hergestellt werden, durch Mischen von Graftpolyolen mit monomodaler Teilchengrößenverteilung und unterschiedlicher Teilchengröße im entsprechenden Verhältnis aber auch indem man als Trägerpolyol in der Reaktionsvorlage ein Polyol verwendet, das bereits Polymerisate aus olefinisch ungesättigten Monomeren enthält.

Zu den übrigen für das erfindungsgemäße Verfahren eingesetzten Einsatzstoffen ist im einzelnen folgendes zu sagen:

Als organische Polyisocyanate a) kommen vorzugsweise aromatische mehrwertige Isocyanate in Betracht.
Im einzelnen seien beispielhaft genannt: 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Mischungen aus 4,4'-und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Isocyanurat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 150 bis 1000 mPa.s.

Als Verbindungen mit mindestens zwei gegenüber Isocyanat reaktiven Wasserstoffatomen b), die gemeinsam mit den erfindungsgemäß eingesetzten Graftpolyolen verwendet werden können, kommen insbesondere Polyetheralkohole und/oder Polyesteralkohole mit OH-Zahlen im Bereich von 100 bis 1200 mgKOH/g zum Einsatz.

Die gemeinsam mit den erfindungsgemäß eingesetzten Graftpolyolen eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die gemeinsam mit den erfindungsgemäß eingesetzten Graftpolyolen verwendeten Polyetheralkohole haben zumeist eine Funktionalität zwischen 2 und 8, insbesondere 3 bis 8.

Insbesondere kommen Polyetherpolyole, die nach bekannten Verfahren, beispielsweise durch anionische Polymerisation von Alkylenoxiden in Gegenwart von Katalysatoren, vorzugsweise Alkalihydroxiden, hergestellt werden, zum Einsatz.

Als Alkylenoxide werden zumeist Ethylenoxid und/oder Propylenoxid, vorzugsweise reines 1,2-Propylenoxid eingesetzt.

Als Startmoleküle kommen insbesondere Verbindungen mit mindestens 3, vorzugsweise 4 bis 8 Hydroxylgruppen oder mit mindestens zwei primären Aminogruppen im Molekül zum Einsatz.

Als Startmoleküle mit mindestens 3, vorzugsweise 4 bis 8 Hydroxylgruppen im Molekül werden vorzugsweise Trimethylopropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diaminodiphenylmethan sowie aliphatische Di- und Polyamine, wie Ethylendiamin, eingesetzt.

Die Polyetherpolyole besitzen eine Funktionalität von vorzugsweise 3 bis 8 und Hydroxylzahlen von vorzugsweise 100 mgKOH/g bis 1200 mgKOH/g und insbesondere 240 mgKOH/g bis 570 mgKOH/g.

Durch den Einsatz von difunktionellen Polyolen, beispielsweise Polyethylenglykole und/oder Polypropylenglykole - mit einem Molgewicht im Bereich zwischen 500 bis 1500 - in der Polyolkomponente kann die Viskosität der Polyolkomponente angepasst werden.

Zu den Verbindungen mit mindestens zwei gegenüber Isocyanat reaktiven Wasserstoffatomen b) gehören auch die gegebenenfalls mitverwendeten Kettenverlängerer und Vernetzer. Die PUR-Hartschaumstoffe können ohne oder unter Mitverwendung von Kettenverlängerungs- und/oder Vernetzungsmitteln hergestellt werden. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente b), eingesetzt.

Weitere Angaben zu den verwendeten Polyetheralkoholen und Polyesteralkoholen sowie ihrer Herstellung finden sich beispielsweise im Kunststoffhandbuch, Band 7 "Polyurethane", herausgegeben von Günter Oertel, Carl-Hanser-Verlag München, 3. Auflage, 1993.

Als Katalysatoren c) werden insbesondere Verbindungen eingesetzt, welche die Reaktion der Isocyanatgruppen mit den mit Isocyanatgruppen reaktiven Gruppen stark beschleunigen.
Solche Katalysatoren sind stark basische Amine, wie z.B. sekundäre aliphatische Amine, Imidazole, Amidine, sowie Alkanolamine oder organische Metallverbindungen, insbesondere organische Zinnverbindungen.

Wenn in den Polyurethan-Hartschaum auch Isocyanuratgruppen eingebaut werden sollen, werden dafür spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Treibmittel d) kann vorzugsweise Wasser verwendet werden, das mit Isocyanatgruppen unter Abspaltung von Kohlendioxid reagiert. In Kombination mit oder an Stelle von Wasser können auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Verbindungen werden zumeist ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und 1,1,1,2,3,3,3-Heptafluorpropan, sowie Perfluoralkane, wie, C₃F₈, C₄F₁₀, C₅F₁₂, C₆F₁₄, und C₇F₁₇. Die genannten physikalischen Treibmittel können allein oder in beliebigen Kombinationen untereinander eingesetzt werden.

Das erfindungsgemäße Verfahren kann, falls erforderlich, in Anwesenheit von Flammschutzmitteln sowie üblichen Hilfs- und/oder Zusatzstoffen Hilfs- und/oder Zusatzstoffen durchgeführt werden.

Als Flammenschutzmittel können organische Phosphorsäure- und oder Phosphonsäureester zur Anwendung kommen. Vorzugsweise werden gegenüber Isocyanatgruppen nicht reaktive Verbindungen eingesetzt. Auch Chlor enthaltende Phosphorsäureester gehören zu den bevorzugten Verbindungen.

Typischer Vertreter dieser Gruppe von Flammschutzmitteln sind Triethylphosphat, Diphenylkresylphosphat, Tris-(Chlorpropyl)-phosphat sowie Diethylethanphosphonat.

Daneben können auch Brom enthaltende Flammschutzmittel zum Einsatz kommen. Als Brom enthaltende Flammschutzmittel werden vorzugsweise gegenüber der Isocyanatgruppe reaktive Gruppen aufweisende Verbindungen eingesetzt. Derartige Verbindungen sind Ester der Tetrabromphthalsäure mit aliphatischen Diolen und Alkoxylierungsprodukte des Dibrombutendiols. Auch Verbindungen, die sich aus der Reihe der bromierten, OH-Gruppen enthaltenden Neopentylverbindungen ableiten, können zur Anwendung kommen.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Polyurethan-Hartschaumstoffe werden die Polyisocyanate a), und die Verbindungen mit mindestens zwei mit Isocyanatgruppen reaktiven Wasserstoffatomen b) in solchen Mengen zur Umsetzung gebracht, daß der Isocyanatindex in einem Bereich zwischen 100 und 220, vorzugsweise zwischen 115 und 195, liegt. Die Polyurethan-Hartschaumstoffe können diskontinuierlich oder kontinuierlich mit Hilfe bekannter Mischvorrichtungen hergestellt werden.

Bei der Herstellung von Polyisocyanuratschäumen kann auch mit einem höheren Index, vorzugsweise bis 350, gearbeitet werden.

Üblicherweise werden die erfindungsgemäßen PUR-Hartschaumstoffe nach dem Zweikomponenten-Verfahren hergestellt. Bei diesem Verfahren werden die Verbindungen mit mindestens zwei gegenüber Isocyanatgruppen reaktiven Wasserstoffatomen b) mit den Flammschutzmitteln, den Katalysatoren c), den Treibmitteln d), sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen in geschlossene Stützwerkzeuge gegossen werden. Nach dieser Technologie werden z.B. diskontinuierlich Sandwichelemente gefertigt.

Daneben kann das Reaktionsgemisch auch frei auf Flächen oder in offene Hohlräume gegossen oder gespritzt werden. Nach diesem Verfahren lassen sich Dächer bzw. komplizierte Behälter vor Ort isolieren.

Auch die kontinuierliche Vermischung der Isocyanatkomponente mit der Polyolkomponente zur Herstellung von Sandwich- oder Dämmelementen auf Doppelbandanlagen ist eine bevorzugte Ausführungsform des erfindungsgemäßen Verfahrens. Bei dieser Technologie ist es üblich, die Katalysatoren und die Treibmittel über weitere Dosierpumpen in die Polkomponente zu dosieren. Dabei können die eingesetzten Komponenten in bis zu 8 Einzelkomponenten aufgeteilt werden. Die Verschäumrezepturen lassen sich, abgeleitet von dem Zweikomponentenverfahren in einfacher Weise auf die Verarbeitung von Mehrkomponentensystemen umrechnen.

Die nach dem erfindungsgemäßen Verfahren hergestellten Polyurethan-Hartschaumstoffe zeichnen sich, wie oben dargestellt, durch optimale Verarbeitungseigenschaften, insbesondere eine gute Aushärtung, aus. Überraschenderweise zeigen die nach dem erfindungsgemäßen Verfahren hergestellten Polyurethan-Hartschaumstoffe eine verringerte Neigung zur Bildung von Lunkern.

Durch den im Vergleich zu üblichen Graftpolyolen erhöhten Anteil an Ethylenoxideinheiten im Trägerpolyol und im Makromer werden phasenstabile Formulierungen zur Herstellung von Hartschaumstoffen erhalten. Damit kann die dem Stand der Technik entsprechende Ausrüstung zu Verschäumung eingesetzt werden, z.B. bei der Herstellung von Kühlgeräten oder bei der kontinuierlichen Fertigung von Sandwichpanelen. Ein permanentes Aufrühren der Polyolfmischung während der Maschinenverschäumung ist somit nicht erforderlich. Die nach dem erfindungsgemäßen Verfahren hergestellten Hartschaumstoffe sind trotz der Verwendung von Graftpolyolen praktisch vollständig geschlossenzellig.

Die erfindungsgemäß eingesetzten Graftpolyole können prinzipiell auch zur Herstellung von Weichschaumstoffen verwendet werden. Die erfindungsgemäß eingesetzten Graftpolyole sind in für die Herstellung von Weichschaumstoffen typischen Polyolkomponenten phasenstabil und ermöglichen eine Verarbeitung entsprechend dem Stand der Technik. Insbesondere bei der Herstellung von hochelastischen, offenzelligen Polyurethan-Weichschaumstoffen können die polaren Graftpolyole vorteilhaft eingesetzt werden. Die so hergestellten Schäume weisen darüber hinaus auch gute mechanische Eigenschaften auf.

Die Erfindung soll an nachstehenden Beispielen näher erläutert werden.

### Meßmethoden

1) Die Viskosität der Polyole bei 25°C wurde mit einem Rotationsviskosimeter Rheotec RC 20 unter Verwendung der Spindel CC 25 DIN (Spindel-Durchmesser: 12.5 mm; Messzylinder-Innendurchmesser: 13.56 mm) bei einer Scherrate von 50 1/s bestimmt.
2) Der Feststoffgehalt der Graftpolyole und der Graftpolyolmischungen wurde gravimetrisch ermittelt. Dazu wurden ca. 2 g Graftpolyol mit ca. 80 g Isopropanol oder Methanol in einem Zentrifugenröhrchen fein dispergiert. Anschließend wurde der Feststoff in einer Hochgeschwindigkeitszentrifuge Sorvall RC 26 Plus bei 20000 U/min (44670 g) abgetrennt. Nach Dekantieren der sich über dem Feststoff befindlichen flüssigen Phase wurde der Feststoff noch weitere zweimal in Isopropanol bzw. Methanol redispergiert, gefolgt von Zentrifugieren und dem Abtrennen der flüssigen Phase. Nach Trocknen des Feststoffes bei 80°C und einem Druck von < 1 mbar für mindestens zwei Stunden in einem Vakuumtrockenschrank wurde der prozentuale Feststoffgehalt aus der Masse des abgetrennten Feststoffes und der Masse des eingesetzten Graftpolyols berechnet.
3) Die Dielektrizitätskonstante ε' der Polyole und Makromer wurde nach DIN 53 483 ermittelt. Die bei 23°C und 1000 Hz gemessenen Werte sind angegeben.
4) Die Härtung wurde mit dem Bolzentest ermittelt. Dazu wird 2, 3 und 4 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs. Angegeben ist jeweils die Summe der gemessenen Maximalkräfte nach 2, 3 und 4 Minuten.
5) Die Fließfähigkeit wurde mit dem Schlauchtest ermittelt. Dazu werden 100 g des durch Vermischen der Komponenten erhaltenen Reaktionsgemischs in einen Kunststoffschlauch mit 45 mm Durchmesser gegossen und der Schlauch verschlossen. Die Länge des Fließwegs im Kunststoffschlauch in cm ist ein Maß für die Fließfähigkeit.
6) Die Wärmeleitfähigkeit wurde bestimmt nach DIN 52616. Zur Herstellung der Prüfkörper wurde das Polyurethan-Reaktionsgemisch in eine Form der Maße 22,5 X 22,5 X 22 cm gegossen (10 % Überfüllung) und nach einigen Stunden ein Prüfkörper der Dimension 20X20X5 cm aus der Mitte geschnitten.
7) Die Druckfestigkeit wurde bestimmt nach DIN 53 421 / DIN EN ISO 604
8) Der Anteil an geschlossenen Zellen wurde bestimmt nach ISO 4590.
9) Visuelle Beurteilung der Schaumstruktur/Feinzelligkeit des Schaums. 1: sehr feinzellig; 2: feinzellig; 3: leicht grobzellig; 4: grobzellig.
10) Visuelle Beurteilung der Tendenz zur Bildung von Bodenstörungen bzw. Lunkern der Sandwichelemente. 1: sehr glatte Oberfläche, keinerlei Bodenstörungen/Lunker an der Unterseite des Sandwichelements; 2: sehr vereinzelt schwache Bodenstörungen/Lunker an der Unterseite des Sandwichelements; 3: einige Bodenstörungen/Lunker an der Unterseite des Sandwichelements; 4: ganzflächig massive Bodenstörungen an der Unterseite des Sandwichelements.
11) Beurteilung der Aushärtung der Sandwichelemente am Bandende: 1: minimale Änderung der Elementdicke nach 24 Stunden; 2: leichte Änderung der Elementdicke nach 24 Stunden; 3: deutliche Änderung der Elementdicke nach 24 Stunden.
12) Das Brandverhalten wurde bestimmt im Kleinbrennertest nach DIN 4102

### Herstellung von Macromer 1 und 7

Zum Basispolyol mit einem Wassergehalt < 0,02 Gew.% wurden Kalzium-Naphthenat (0,5 Gew.-% bezogen auf das Basispolyol) und Maleinsäureanhydrid (0,8 mol pro mol Basispolyol) gegeben. Unter Stickstoffatmosphäre und Rühren wurde das Reaktionsgemisch auf 125°C erwärmt. Während der anschließenden zweistündigen Reaktionszeit bildete sich der Halbester der Maleinsäure mit dem Basispolyol. Nach Erwärmen des Reaktionsgemisches auf 143°C wurde ein Überschuss an Propylenoxid (4,4-fach bezogen auf die molare Menge an Maleinsäureanhydrid) zugegeben. Das Gemisch ließ man für weitere acht Stunden reagieren. Zum Ende der Reaktionsperiode wurde der Überschuss an Propylenoxid unter Vakuum entfernt, das Produkt auf 25°C abgekühlt und mit Antioxidantien stabilisiert.

### Herstellung der Macromere 2-4, 6, 8 und 9

Zum Basispolyol mit einem Wassergehalt < 0,02 Gew.% wurden bei einer Temperatur von 80°C unter Rühren Dibutylzinndilaurat als Veresterungskatalysator und 3-Isopropenyl-α,α-dimethylbenzyl-isocyanat (TMI) (0,8 mol pro mol Basispolyol) gegeben. Das Gemisch wurde für eine weitere Stunde bei 80°C gerührt. Anschließend wurde Phosphorsäure zur Deaktivierung des Katalysators zugegeben und das Produkt auf 25°C abgekühlt und mit Antioxidantien stabilisiert.

### Herstellung des Macromers 5

Zum Basispolyol mit einem Wassergehalt < 0,02 Gew.% wurden bei einer Temperatur von 80°C unter Rühren Dibutylzinndilaurat als Veresterungskatalysator und TDI (2,4-und 2,6-Toluylen-diisocyanat und die entsprechenden Isomerengemische) gegeben. Anschließend wurde 3-Isopropenyl-α,α-dimethylbenzyl-isocyanat (TMI) zugefügt. Die Gesamtmenge an Isocyanat betrug 0,8 mol pro mol Basispolyol. Das Gemisch wurde für eine weitere Stunde bei 80°C gerührt. Anschließend wurde Phosphorsäure zur Deaktivierung des Katalysators zugegeben und das Produkt auf 25°C abgekühlt und mit Antioxidantien stabilisiert.

### Herstellung des Macromers 10

Zum Basispolyesterol auf Basis von Adipinsäure und Monoethylenglykol mit einer Molmasse von 2000 g/mol und einer Hydroxylzahl von 55 mg KOH/g wurden bei einer Temperatur von 80°C unter Rühren Dibutylzinndilaurat als Veresterungskatalysator und 3-Isopropenyl-α,α-dimethylbenzyl-isocyanat (TMI) (0,8 mol pro mol Basispolyesterol) gegeben. Das Gemisch wurde für weitere 8 Stunden bei 80°C gerührt. Anschließend wurde Phosphorsäure zur Deaktivierung des Katalysators zugegeben und das Produkt auf 25°C abgekühlt und mit Antioxidantien stabilisiert.

### Herstellung der Graftpolyole

Die in den folgenden Beispielen eingesetzten Graftpolyole wurden in kontinuierlichen Verfahren und diskontinuierlichen Verfahren hergestellt. Die Synthese von Graftpolyolen nach beiden Verfahren ist bekannt und wird beispielsweise in EP 439755 beschrieben. Eine Sonderform des Semi Batch Verfahrens ist das Semi Batch Saatverfahren, bei dem in der Reaktionsvorlage zusätzlich ein Graftpolyol als Saat eingesetzt wird, beispielsweise beschrieben in EP 510533. Die Synthese von Graftpolyolen mit einer bimodalen Teilchengrößenverteilung wird in WO 03/078496 beschrieben. Die Synthese von Graftpolyolen nach einen kontinuierlichen Verfahren ist ebenfalls bekannt und wird beispielsweise in WO 00/59971 beschrieben.

### Graftpolyole, hergestellt im Semi Batch Verfahren

Die Herstellung der Graftpolyole nach dem Semi Batch Verfahren erfolgte in einem 2-Liter-Autoklav ausgestattet mit 2-stufigen Rührwerk, innenliegenden Kühlschlangen und elektrischen Heizmantel. Vor Beginn der Reaktion wurde der Reaktor mit einem Gemisch aus Carrierpolyol und Macromer befüllt, mit Stickstoff gespült und auf Synthesetemperatur von 125 bzw. 130°C erwärmt. Bei einigen Synthesen wurde der Reaktionsvorlage neben dem Carrierpolyol und dem Macromer zusätzlich ein Graftpolyol als Saat zugesetzt . Bei einer weiteren Gruppe von Versuchen wurde nur ein Teil des Macromers im Reaktor vorgelegt. Die verbleibende Menge wurde während der Synthese über einen unabhängigen Dosierstrom in den Reaktor überführt. Beginn und Ende der Macromerdosierung sind Tabelle 3 zu entnehmen. Der restliche Teil der Reaktionsmischung bestehend aus weiteren Carrierpolyol, Initiator, den Monomeren und den Reaktionsmoderator wurde in mindestens zwei Dosierbehältern vorgelegt. Die Synthese der Graftpolyole erfolgte durch Überführen der Rohstoffe aus den Dosierbehältern mit konstanter Dosiergeschwindigkeit über einen statischen In-Line Mischer in den Reaktor. Die Dosierdauer für das Monomer-Moderator-Gemisch betrug 150 oder 180 Minute, während das Polyol-Initiator-Gemisch über 165 oder 195 Minuten in den Reaktor dosiert wurde. Nach weiteren 10 bis 30 Minuten Nachreaktionszeit bei Reaktionstemperatur wurde das Rohgraftpolyol über das Bodenablaufventil in einen Glaskolben überführt. Anschließend wurde das Produkt bei einer Temperatur von 135°C unter Vakuum (< 0,1 mbar) von den nicht umgesetzten Monomeren und anderen flüchtigen Verbindungen befreit. Das Endprodukt wurde abschließend mit Antioxidantien stabilisiert.

**Tabelle 1: Graftpolyole, hergestellt im Semi Batch Verfahren**

| **Versuch** | **Polyol 1 Vergleichsbeispiel** | **Polyol 2 Vergleichsbeispiel** | **Polyol 3 Vergleichsbeispiel** | **Polyol 4 Vergleichsbeispiel** | **Polyol 5 Vergleichsbeispiel** | **Polyol 6 Vergleichsbeispiel** | **Polyol 7 n.e.** |
|---|---|---|---|---|---|---|---|
| Temperatur (°C) | 125 | 125 | 125 | 125 | 125 | 125 | 125 |
| Startdruck (bar) | 0 | 0 | 0 | 0 | 0 | 0 | 0 |
| Reaktorvorlage | | | | | | | |
| Carrierpolyol (g) | Polyol 8 156,81 | Polyol 8 155,16 | Polyol 8 155,16 | Polyol 8 291,30 | Polyol 9 298,91 | Polyol 10 64,39 | Polyol 11 179,38 |
| Macromer (g) | Mac. 1 10,99 | Mac. 2 14,39 | Mac.3 14,39 | Mac.3 68,02 | Mac.3 52,32 | Mac.3 6,54 | Mac. 4 16,80 |
| Saat | - | - | - | - | - | - | - |
| Dosierstrom 1 | | | | | | | |
| Acrylnitril (g) | 87,19 | 87,19 | 87,19 | 174,38 | 174,38 | 36,33 | 69,99 |
| Styren (g) | 174,41 | 174,41 | 174,41 | 348,82 | 348,82 | 72,67 | 140,01 |
| N-Dodecanthiol (g) | 2,75 | 2,75 | 2,75 | 5,49 | 4,49 | 1,14 | 2,21 |
| Dosierdauer (min) | 150 | 150 | 150 | 150 | 150 | 150 | 150 |
| Dosierstrom 2 | | | | | | | |
| Carherpolyol (g) | Polyol 8 166,64 | Polyol 8 164,89 | Polyol 8 164,89 | Polyol 8 309,56 | Polyol 9 317,65 | Polyol 10 68,42 | Polyol 11 190,63 |
| Initiator (g) | Initiator 1 1,22 | Initiator 1 1,22 | Initiator 1 1,22 | Initiator 1 2,43 | Initiator 1 2,43 | Initiator 1 0,51 | Initiator 1 0,98 |
| Dosierdauer (min) | 165 | 165 | 165 | 165 | 165 | 165 | 165 |
| Kenndaten | | | | | | | |
| Viskosität (mPas) | 4900 | 3800 | 3900 | 5800 | 3600 | 3200 | 7600 |
| Feststoffgehalt (Gew.-%) | 45 | 45 | 45 | 45 | 45 | 42 | 35 |

| | | | | | | | |
|---|---|---|---|---|---|---|---|
| * n.e. = nicht erfindungsgemäß | | | | | | | |

**Tabelle 2: Graftpolyole, hergestellt im Semi Batch Verfahren**

| **Versuch** | **Polyol 12** | **Polyol 13 n.e.** | **Polyol 14 n.e.** | **Polyol15 n.e.** | **Polyol16 n.e.** | **Polyol17 n.e.** | **Polyol18 n.e.** | **Polyol 19** |
|---|---|---|---|---|---|---|---|---|
| Temperatur (°C) | 125 | 125 | 125 | 125 | 125 | 125 | 125 | 125 |
| Startdruck (bar) | 0 | 0 | 0 | 0 | 0 | 0 | 0 | 0 |
| Reaktorvorlage | | | | | | | | |
| Carrierpolyol (g) | Polyol 20 358,77 | Polyol 10 74,74 | Polyol 21 363,86 | Polyol 11 356,73 | Polyol 11 727,72 | Polyol 11 600,59 | Polyol 22 617,20 | Polyol 8, Polyol 23 (1:1) 356,73 |
| Macromer (g) | Mac. 3 33,60 | Mac. 4 7,00 | Mac. 5 23,10 | Mac. 6 37,80 | Mac. 6 46,20 | Mac. 6 64,80 | Mac 7 42,72 | Mac. 6 37,80 |
| Saat | - | - | - | - | Polyol 15 180.00 | Polyol 15 231,43 | Polyol 24 184,95 | - |
| Dosierstrom 1 | | | | | | | | |
| Acrylnitril (g) | 139,99 | 29,16 | 139,99 | 139,99 | 279,97 | 359,96 | 355,96 | 139,99 |
| Styren (g) | 280,01 | 58,34 | 280,01 | 280,01 | 560,03 | 720,04 | 712,04 | 280,01 |
| N-Dodecanthiol (g) | 4,41 | 0,92 | 4,41 | 4,41 | 8,82 | 11,34 | 11,21 | 4,41 |
| Dosierdauer (min) | 150 | 150 | 150 | 150 | 150 | 150 | 150 | 150 |
| Dosierstrom 2 | | | | | | | | |
| Carrierpolyol (g) | Polyol 20 381,27 | Polyol 10 79,43 | Polyol 21 386,68 | Polyol 11 379,10 | Polyol 11 773,35 | Polyol 11 638,25 | Polyol 22 655,90 | Polyol 8, Polyol 23 (1:1) 379,10 |
| Initiator (g) | Initiator 1 1,95 | Initiator 1 0,41 | Initiator 1 1,95 | Initiator 1 1,95 | Initiator 1 3,91 | Initiator 1 5,02 | Initiator 1 4,97 | Initiator 1 1,95 |
| Dosierdauer (min) | 165 | 165 | 165 | 165 | 165 | 165 | 165 | 165 |
| Kenndaten | | | | | | | | |
| Viskosität (mPas) | 30000 | 35000 | 5000 | 6600 | 8900 | 40000 | 17400 | 2500 |
| Feststoffgehalt (Gew.-%) | 40 | 35 | 35 | 35 | 35 | 45 | 45 | 35 |

| | | | | | | | | |
|---|---|---|---|---|---|---|---|---|
| *n.e. = nicht erfindungsgemäß | | | | | | | | |

**Tabelle 3: Graftpolyole, hergestellt im Semi Batch Verfahren**

| **Versuch** | **Polyol 25 Vergleichsbeispiel** | **Polyol 26 Vergleichsbeispiel** | **Polyol 27** |
|---|---|---|---|
| Temperatur (°C) | 125 | 125 | 125 |
| Startdruck (bar) | 0 | 0 | 0 |
| Reaktorvorlage | | | |
| Carrierpolyol (g) | Polyol 28 | Polyol 29 | Polyol 8, |
| | 629,07 | 610,29 | Polyol 23 (1:1) 356,73 |
| Macromer (g) | Mac. 8 | Mac. 9 | Mac. 10 |
| | 22,26 | 48,35 | 37,80 |
| Saat | Polyol 30 | Polyol 30 | - |
| | 193,99 | 196,19 | |
| Dosierstrom 1 | | | |
| Acrylnitril (g) | 360,11 | 364,20 | 139,99 |
| Styren (g) | 720,34 | 728,50 | 280,01 |
| N-Dodecanthiol (g) | 11,35 | 11,47 | 4,41 |
| Dosierdauer (min) | 150 | 150 | 150 |
| Dosierstrom 2 | | | |
| Carrierpolyol (g) | Polyol 28 | Polyol 29 | Polyol 8, |
| | 668,52 | 648,56 | Polyol 23 (1:1) 379,10 |
| Initiator (g) | Initiator 1 | Initiator 1 | Initiator 1 |
| | 4,97 | 5,03 | 1,95 |
| Dosierdauer (min) | 165 | 165 | 165 |
| Dosierstrom 3 | | | |
| Macromer | Mac. 8 | Mac. 9 | |
| | 33,39 | 33,30 | - |
| Dosierdauer (min) | 13-16 | 14,5 | - |
| Kenndaten | | | |
| Viskosität (mPas) | 7300 | 4600 | 30000 |
| Feststoffgehalt (Gew.-%) | 45 | 45 | 35 |

### Beispiele 1-16, Vergleichsbeispiele 1-3 und A bis H: Herstellung von Hartschaumstoffen zum Einsatz in Kühlgeräten (Maschinenverschäumung)

Die verschiedenen Polyole, Stabilisatoren, Katalysatoren werden mit Wasser und dem Treibmittel in den in Tabelle 4-6 angegebenen Verhältnissen gemischt. 100 Gewichtsteile der Polyolkomponente wurden mit der jeweiligen in Tabelle 4-6 genannten Menge einer Mischung aus Diphenylmethandiisocyanat und Polyphenylen-polymethylen-polyisocyanat mit einem NCO-Gehalt von 31,5 Gew.-% und einer Viskosität von 200 mPas (25°C) in einer Hochdruck-Verschäummaschine vom Typ Puromat® HD 30 (Elastogran GmbH) vermischt. Die Reaktionsmischung wurde in ein Formwerkzeug der Abmessungen 200 cm X 20 cm X 5 cm bzw. 40 cm X 70 cm X 9 cm eingespritzt und dort aufschäumen lassen. Die Eigenschaften und Kennzahlen der erhaltenen Schaumstoffe sind in Tabelle 4-6 angeben.
Bei den Vergleichsbsp. A bis H wurde das Graftpolyol direkt im Mischkopf mit den andern Komponenten vermischt.

**Tabelle 4: Herstellung der Schaumstoffe (Maschinenverschäumung)**

| | **Vergleichs-b sp. 1** | **Vergleichs- bsp. A** | **Vergleichs- bsp. B** | **n.e. Bsp. 1** | **n.e. Bsp. 2** | **n.e. Bsp. 3** | **n.e. Bsp.4** | **Vergleichs- bsp. C** | **Bsp. 5** |
|---|---|---|---|---|---|---|---|---|---|
| Polyol 40 | 20 | 20 | 20 | 20 | 20 | 20 | 20 | 20 | 20 |
| Polyol 41 | 36 | 16 | 16 | 16 | 16 | 16 | 16 | 16 | 16 |
| Polyol 42 | 30 | 30 | 30 | 30 | 30 | 30 | 30 | 30 | 30 |
| Ricinusöl | 7 | 7 | 7 | 7 | 7 | 7 | 7 | 7 | 7 |
| Polyol 1 | | 20 | | | | | | | |
| Polyol 5 | | | 20 | | | | | | |
| Polyol 7 | | | | 20 | | | | | |
| Polyol 13 | | | | | 20 | | | | |
| Polyol 14 | | | | | | 20 | | | |
| Polyol 17 | | | | | | | 20 | | |
| Polyol 25 | | | | | | | | 20 | |
| Polyol 27 | | | | | | | | | 20 |
| Stabilisator 1 | 2 | 2 | 2 | 2 | 2 | 2 | 2 | 2 | 2 |
| Wasser | 2,3 | 2,3 | 2,3 | 2,3 | 2,3 | 2,3 | 2,3 | 2,3 | 2,3 |
| Katalysator 1 | 0,7 | 0,7 | 0,7 | 0,7 | 0,7 | 0,7 | 0,7 | 0,7 | 0,7 |
| Katalysator 2 | 0,7 | 0,7 | 0,7 | 0,7 | 0,7 | 0,7 | 0,7 | 0,7 | 0,7 |
| Katalysator 3 | 0,7 | 0,7 | 0,7 | 0,7 | 0,7 | 0,7 | 0,7 | 0,7 | 0,7 |
| Cyclopentan 95 % | 14 | 14 | 14 | 14 | 14 | 14 | 14 | 14 | 14 |

| Phasenstabilität der Mischung [23°] | Nach 2 Wochen keine Entmischung | Nach 90 Minuten entmischt | Nach 90 Minuten entmischt | Nach 2 Wochen keine Entmischung | Nach 2 Wochen keine Entmischung | Nach 2 Wochen keine Entmischung | Nach 2 Wochen keine Entmischung | Nach 2 Wochen keine Entmischung | Nach 30 Minuten entmischt |
|---|---|---|---|---|---|---|---|---|---|
| Mischungsverhältnis 100: | 139 | 122 | 122 | 119 | 120 | 119 | 119 | 119 | 125 |
| Kennzahl | 125 | 125 | 125 | 125 | 125 | 125 | 125 | 125 | 125 |
| Abbindezeit [s] | 44 | 41 | 41 | 41 | 42 | 47 | 45 | 44 | 43 |
| Freigeschäumte Rohdichte [g/l] | 22,0 | 22,2 | 21,3 | 21,6 | 21,6 | 21,9 | 21,9 | 21,6 | 21,7 |
| Minimale Fülldichte [g/l] | 31,8 | 31,9 | 31,2 | 31,7 | 31,5 | 31,5 | 32,2 | 32,0 | 31,7 |
| Fließfaktor (min. Fülldichte / freie Rohdichte) | 1,45 | 1,44 | 1,46 | 1,47 | 1,46 | 1,44 | 1,47 | 1,48 | 1,46 |
| Offenzelligkeit [%] | 6 | 7 | 4 | 6 | 4 | 5 | 8 | 6 | 6 |
| Wärmeleitfähigkeit [mW/mK] | 19,3 | 19,2 | 19,6 | 19,8 | 19,5 | 19,4 | 19,2 | 19,4 | 19,3 |
| Druckfestigkeit (RD 31), 10% OP [N/mm²]] | 0,135 | 0,13 | 0,14 | 0,13 | 0,13 | 0,13 | 0,135 | 0,12 | 0,14 |

| | | | | | | | | | |
|---|---|---|---|---|---|---|---|---|---|
| * n.e. = nicht erfindungsgemäß | | | | | | | | | |

**Tabelle 5: Herstellung der Schaumstoffe (Maschinenverschäumung)**

| | **Vergleichs bsp. 2** | **Bsp. 6 n.e.** | **Bsp. 7** | **Vergleichs -bsp. D** | **Vergleichs -bsp. E** | **Vergleichs bsp. F** | **Vergleichs bsp. G** | **Bsp. 8 n.e.** | **Bsp. 9** |
|---|---|---|---|---|---|---|---|---|---|
| Polyol 42 | 30 | 30 | 30 | 30 | 30 | 30 | 30 | 30 | 30 |
| Polyol 43 | 48 | 48 | 48 | 48 | 48 | 48 | 48 | 48 | 48 |
| Polyol 44 | 16 | 16 | | 16 | | | | | |
| Polyol 45 | | | 16 | | | | | | |
| Polyol 17 | | 10 | 10 | | | | | | |
| Polyol 25 | | | | 10 | 16 | | | | |
| Polyol 30 | | | | | | 16 | | | |
| Polyol 1 | | | | | | | 16 | | |
| Polyol 7 | | | | | | | | 16 | |
| Polyol 19 | | | | | | | | | 16 |
| Stabilisator 2 | 2 | 2 | 2 | 2 | 2 | 2 | 2 | 2 | 2 |
| Wasser | 2,3 | 2,3 | 2,3 | 2,3 | 2,3 | 2,3 | 2,3 | 2,3 | 2,3 |
| Katalysator 1 | 1,2 | 1,2 | 1,2 | 1,2 | 1,2 | 1,2 | 1,2 | 1,2 | 1,2 |
| Katalysator 4 | 0,4 | 0,4 | 0,4 | 0,4 | 0,4 | 0,4 | 0,4 | 0,4 | 0,4 |
| Katalysator 5 | 0,5 | 0,5 | 0,5 | 0,5 | 0,5 | 0,5 | 0,5 | 0,5 | 0,5 |
| Cyclopentan 70% | 14 | 14 | 14 | 14 | 14 | 14 | 14 | 14 | 14 |
| Phasenstabilität Polyol [23°] | Nach 2 Wochen keine Entmischung | Nach 2 Wochen keine Entmischung | Nach 2 Wochen keine Entmischung | Nach 30 Minuten entmischt | Nach 30 Minuten entmischt | Nach 30 Minuten entmischt | Nach 90 Minuten entmischt | Nach 2 Wochen keine Entmischung | Nach 2 Wochen keine Entmischung |
| Mischungsverhältnis 100: | 125 | 116 | 116 | 116 | 119 | 120 | 122 | 120 | 114 |
| Kennzahl | 117 | 117 | 117 | 117 | 117 | 117 | 117 | 117 | 117 |
| Abbindezeit [s] | 39 | 41 | 40 | 41 | 38 | 42 | 45 | 44 | 44 |
| Freigeschäumte Rohdichte [g/l] | 24,4 | 24,3 | 23,7 | 24,0 | 23,9 | 23,3 | 24,3 | 23,8 | 24,0 |
| Minimale Fülldichte [g/l] | 31,9 | 32,2 | 31,8 | 32,4 | 31,8 | 31,5 | 32,3 | 31,7 | 32,2 |
| Fließfaktor (min. Fülldichte / freie Rohdichte) | 1,31 | 1,33 | 1,34 | 1,35 | 1,33 | 1,35 | 1,33 | 1,33 | 1,34 |
| Offenzelligkeit [%] | 6 | 5 | 7 | 4 | 5 | 5 | 6 | 4 | 5 |
| Wärmeleitfähigkeit [mW/mK] | 19,7 | 19,5 | 20,1 | 19,8 | 19,7 | 19,5 | 19,7 | 20,0 | 19,8 |
| Druckfestigkeit (RD 31), 10 % OP [N/mm²]] | 0,15 | 0,15 | 0,14 | 0,15 | 0,15 | 0,16 | 0,14 | 0,15 | 0,15 |

| | | | | | | | | | |
|---|---|---|---|---|---|---|---|---|---|
| * n.e. = nicht erfindungsgemäß | | | | | | | | | |

**Tabelle 6: Herstellung der Schaumstoffe (Maschinenverschäumung)**

| | **Vergleichs- bsp. 3** | **Vergleichs- bsp. H** | **Bp. 10 n.e.** | **Bsp.11 n.e.** | **Bsp.12 n.e.** | **Bp. 13 n.e.** | **Bsp.14 n.e.** | **Bsp.15 n.e.** | **Bsp.16 n.e.** |
|---|---|---|---|---|---|---|---|---|---|
| Polyol 42 | 20 | 20 | 20 | 20 | 20 | 20 | 20 | 20 | 20 |
| Polyol 43 | 56,6 | 56,6 | 56,6 | 56,6 | 56,6 | 56,6 | 56,6 | 56,6 | 56,6 |
| Polyol 44 | 18 | | | | | | | | |
| Polyol 25 | | 18 | | | | | | | |
| Polyol 17 | | | 18 | 18 | 18 | 18 | 18 | 18 | 18 |
| Stabilisator 2 | 2 | 2 | 2 | 2 | 2 | 2 | 2 | 2 | 2 |
| Wasser | 2,3 | 2,3 | 2,3 | 2,3 | 2,3 | 2,3 | 2,3 | 2,3 | 2,3 |
| Katalysator 1 | 0,9 | 1,2 | 1,2 | 0,9 | 0,9 | 2,5 | 2,0 | 2,2 | 0,6 |
| Katalysator 4 | 0,4 | 0,4 | 0,4 | 0,4 | 0,4 | 0,6 | 0,8 | 0,6 | 0,4 |
| Katalysator 5 | 0,5 | 0,5 | 0,5 | 0,5 | 0,5 | 1,0 | 1,2 | 0,9 | 0,5 |
| Cyclopentan | 14 | 14 | 14 | 9,8 | 12 | | | | 8 |
| Isopentan | | | | 4,2 | | | | | 3,5 |
| Isobutan | | | | | 2 | | | | |
| HFC 245fa | | | | | | 35 | | | |
| HFC 365mfc | | | | | | | 35 | | |
| HFC 141 b | | | | | | | | 35 | |
| Ameisensäure | | | | | | | | | 4,5 |
| Phasenstabilität Polyol [23°] | Nach 2 Wochen keine Ent mischung | Nach 30 Minuten entmischt | Nach 2 Wochen keine Ent mischung | Nach 2 Wochen keine Ent mischung | Nach 2 Wochen keine Entmischung | Nach 2 Wochen keine Entmischung | Nach 2 Wochen keine Entmischung | Nach 2 Wochen keine Entmischung | Nach 2 Wochen keine Ententmischt |
| Mischungsverhältnis 100: | 125 | 119 | 119 | 119 | 119 | 99 | 99 | 100 | 117 |
| Kennzahl | 117 | 117 | 117 | 117 | 117 | 117 | 117 | 117 | 117 |
| Abbindezeit [s] | 43 | 41 | 41 | 38 | 41 | 38 | 42 | 39 | 38 |
| Freigeschäumte Rohdichte [g/l] | 23,8 | 22,5 | 23,8 | 22,3 | 23,0 | 22,5 | 22,0 | 21,6 | 20,8 |
| Minimale Fülldichte [g/l] | 31,6 | 30,1 | 31,9 | 30,1 | 31,0 | 28,8 | 29,5 | 30,6 | 28,3 |
| Fließfaktor (min. Fülldichte / freie Rohdichte) | 1,33 | 1,34 | 1,34 | 1,35 | 1,35 | 1,30 | 1,34 | 1,42 | 1,36 |
| Offenzelligkeit [%] | 6 | 6 | 6 | 7 | 6 | 5 | 5 | 4 | 6 |
| Wärmeleitfähigkeit [mW/mK] | 20,0 | 19,7 | 19,8 | 20,3 | 19,8 | 17,9 | 18,7 | 16,8 | 19,6 |
| Druckfestigkeit (RD 31) 10 % OP, [N/mm²] | 0,15 | 0,15 | 0,15 | 0,15 | 0,14 | 0,13 | 0,14 | 0,13 | 0,13 |
| Nachtrieb nach 24 h, 5 Min. 10 % Overpack [mm] | 92,0 | 90,9 | 91,2 | 91,0 | 91,4 | 91,3 | 91,3 | 91,1 | 91,8 |

| | | | | | | | | | |
|---|---|---|---|---|---|---|---|---|---|
| * n.e. = nicht erfindungsgemäß | | | | | | | | | |

### Beispiele 17 bis 23 und Vergleichsbeispiele 4 bis 6, sowie I bis U (Herstellung von Sandwichelementen)

Aus den in den Tabellen 4, 5 und 6 aufgeführten Einsatzstoffen wurde eine Polyolkomponente hergestellt und im angegebenen Mischungsverhältnis auf einer Doppelbandanlage mit einer Mischung aus Diphenylmethandiisocyanat und Polyphenylen-polymethylen-polyisocyanat mit einem NCO-Gehalt von 31,0 Gew.-% und einer Viskosität von 520 mPas (25°C) zur Herstellung eines Sandwichelements mit einer Stärke von 80 mm bzw. 120 mm zur Reaktion gebracht. Bei den Vergleichsbeispielen I bis U wurde das Graftpolyol bzw eine Graftpolyol und Polyol 42 enthaltende lagerstabile Mischung direkt im Mischkopf mit den übrigen Komponenten vermischt.
Die eingesetzten Rohstoffe sowie die Eigenschaften der Sandwichelemente sind in den Tabellen 3 bis 5 aufgeführt. Alle Hartschaumstoffe in allen Beispielen und Vergleichsbeispielen erreichen die Wärmeleitfähigkeitsgruppe 25 nach DIN 18 164 Teil 1.

**Tabelle 7**

| | **Vergleichs- bsp. 4** | **Vergleichs- bsp. I** | **Vergleichs- bsp. J** | **Vergleichs- bsp. K** | **Vergleichs- bsp. L** | **Bp. 17 n.e.** | **Bsp.18 n.e.** | **Bsp.19 n.e.** |
|---|---|---|---|---|---|---|---|---|
| Polyol 46 | 20 | 20 | 20 | 20 | 20 | 20 | 20 | 20 |
| Polyol 47 | 18,5 | 18,5 | 18,5 | 18,5 | 18,5 | 18,5 | 18,5 | 18,5 |
| Polyol 48 | 16 | 16 | 16 | 16 | 16 | 16 | 16 | 16 |
| Polyol 49 | 20 | 20 | 20 | 20 | 20 | 20 | 20 | 20 |
| Polyol 50 | 10 | 10 | 10 | 10 | 10 | 10 | 10 | 10 |
| Glycerin | 2 | 2 | 2 | 2 | 2 | 2 | 2 | 2 |
| Dipropylenglykol | 0,2 | 0,2 | 0,2 | 0,2 | 0,2 | 0,2 | 0,2 | 0,2 |
| Polyol 26 | | 2,5 | 5 | | | | | |
| Polyol 52 | | 2 | | 2 | | | | |
| Polyol 25 | | | | 2,5 | | | | |
| Polyol 5 | | | | | 5 | | | |
| Polyol 7 | | | | | | 5 | | |
| Polyol 13 | | | | | | | 5 | |
| Polyol 20 | | | | | | | | 5 |
| Flammschutz- mittel 1 | 12 | 12 | 12 | 12 | 12 | 12 | 12 | 12 |
| Stabilisator 3 | 1 | 1,5 | 1 | 1,5 | 1 | 1 | 1,5 | 1 |
| Katalysator 1 | 4,6 | 4,6 | 4,6 | 4,6 | 4,6 | 4,6 | 4,6 | 4,6 |
| Wasser | 2,5 | 2,5 | 2,5 | 2,5 | 2,5 | 2,5 | 2,5 | 2,5 |
| n-Pentan | 7,0 | 7,0 | 7,0 | 7,0 | 7,0 | 7,0 | 7,0 | 7,0 |
| Phasenstabilität Polyol [23°] | Nach 2 Wochen keine Entmischung | Nach 1 Stunde entmischt | Nach 1 Stunde entmischt | Nach 1 Stunde entmischt | Nach 1 Stunde entmischt | Nach 2 Wochen keine Entmischung | Nach 2 Wochen keine Entmischung | Nach 2 Wochen keine Entmischung |
| Mischungsverhäl tnis 100: | 119 | 119 | 119 | 119 | 119 | 119 | 119 | 119 |
| Startzeit [s] | 15 | 14 | 15 | 15 | 14 | 16 | 16 | 15 |
| Abbindezeit [s] | 45 | 44 | 46 | 45 | 44 | 45 | 46 | 46 |
| Rohdichte [g/l] | 42 | 43 | 42 | 44 | 41 | 42 | 42 | 43 |
| Elementdicke [mm] | 80 | 80 | 80 | 80 | 80 | 80 | 80 | 80 |
| Bolzentest [N] | 168 | 195 | 221 | 203 | 228 | 231 | 219 | 227 |
| Offenzelligkeit [%] | 8 | 9 | 7 | 8 | 6 | 9 | 10 | 8 |
| Brandverhalten (DIN 4102) | B3 | B3 | B3 | B3 | B3 | B3 | B3 | B3 |
| Aushärtung am 3 Bandende | | 2 | 1-2 | 2 | 1-2 | 1-2 | 1-2 | 1-2 |
| Lunkerhäufigkeit | 3 | 2 | 1-2 | 2 | 1-2 | 1-2 | 1-2 | 1-2 |
| Schaumstruktur | 2 | 2 | 2 | 2 | 2 | 2 | 2 | 2 |

| | | | | | | | | |
|---|---|---|---|---|---|---|---|---|
| * n.e. = nicht erfindungsgemäß | | | | | | | | |

**Tabelle 8**

| | **Vergleichs- bsp. 6** | **Vergleichs- bsp. M** | **Vergleichs- bsp. N** | **Vergleichs- bsp. O** | **Vergleichs- bsp. P** | **Bsp. 20** | **Bsp. 21 n.e.** |
|---|---|---|---|---|---|---|---|
| Polyol 46 | 51,15 | 51,15 | 51,15 | 51,15 | 51,15 | 51,15 | 51,15 |
| Polyol 51 | 5 | 5 | 5 | 5 | 5 | 5 | 5 |
| Glycerin | 4,5 | 4,5 | 4,5 | 4,5 | 4,5 | 4,5 | 4,5 |
| Dipropylenglykol | 0,2 | 0,2 | 0,2 | 0,2 | 0,2 | 0,2 | 0,2 |
| Polyol 26 | | 2,5 | 5 | | | | |
| Polyol 52 | | 2 | | 2 | | | |
| Polyol 25 | | | | 2,5 | | | |
| Polyol 1 | | | | | 5 | | |
| Polyol 12 | | | | | | 5 | |
| Polyol 17 | | | | | | | 5 |
| Flammschutzmittel 1 | 20 | 20 | 20 | 20 | 20 | 20 | 20 |
| Flammschutzmittel 2 | 5 | 5 | 5 | 5 | 5 | 5 | 5 |
| Flammschutzmittel 3 | 12,5 | 12,5 | 12,5 | 12,5 | 12,5 | 12,5 | 12,5 |
| Stabilisator 4 | 1,3 | 1,3 | 0,5 | 0,5 | 0,5 | 0,5 | 0,5 |
| Stabilisator 5 | 0,5 | 0,5 | 0,5 | 0,5 | 0,5 | 0,5 | 0,5 |
| Katalysator 6 | 3,1 | 3,1 | 3,1 | 3,1 | 3,1 | 3,1 | 3,1 |
| Wasser | 2,55 | 2,55 | 2,55 | 2,55 | 2,55 | 2,55 | 2,55 |
| n-Pentan | 6,0 | 6,0 | 6,0 | 6,0 | 6,0 | 6,0 | 6,0 |
| Phasenstabilität Polyol [23°] | Nach 2 Wochen | Nach 1 Stunde | Nach 1 Stunde | Nach 1 Stunde | Nach 1 Stunde | Nach 4 Stunden | Nach 2 Wochen |
| | keine Entmischung | entmischt | entmischt | entmischt | entmischt | entmischt | keine Entmischung |
| Mischungsverhältnis 100: | 126 | 126 | 126 | 126 | 126 | 126 | 126 |
| Startzeit [s] | 17 | 18 | 16 | 17 | 17 | 18 | 19 |
| Abbindezeit [s] | 45 | 45 | 44 | 46 | 45 | 46 | 45 |
| Rohdichte [g/l] | 40 | 41 | 41 | 29 | 39 | 41 | 39 |
| Elementdicke [mm] | 120 | 120 | 120 | 120 | 120 | 120 | 120 |
| Bolzentest [N] | 120 | 180 | 210 | 191 | 201 | 225 | 202 |
| Offenzelligkeit [%] | 8 | 10 | 7 | 6 | 9 | 8 | 10 |
| Brandverhatten (DIN 4102) | B2 | B2 | B2 | B2 | B2 | B2 | B2 |
| Aushärtung am Bandende | 3 | 2 | 1-2 | 2 | 1-2 | 1-2 | 1-2 |
| Lunkerhäufigkeit | 3 | 2 | 1-2 | 2 | 1-2 | 1-2 | 1-2 |
| Schaumstruktur | 2 | 2 | 2 | 2 | 2 | 2 | 2 |

| | | | | | | | |
|---|---|---|---|---|---|---|---|
| * n.e. = nicht erfindungsgemäß | | | | | | | |

**Tabelle 9**

| | **Vergleichs- bsp. 7** | **Vergleichs- bsp. Q** | **Vergleichs- bsp. R** | **Vergleichs- bsp. S** | **Vergleichs- bsp. T** | **Bsp. 22** | **Bsp. 23** | **Vergleichs- bsp. U** |
|---|---|---|---|---|---|---|---|---|
| Polyol 53 | 31,14 | 31,14 | 31,14 | 31,14 | 31,14 | 31,14 | 31,14 | 31,14 |
| Polyol 22 | 38,47 | 38,47 | 38,47 | 38,47 | 38,47 | 38,47 | 38,47 | 38,47 |
| Polyol 26 | | 2,5 | 5 | | | | | |
| Polyol 52 | | 2 | | 2 | | | | |
| Polyol 25 | | | | 2,5 | | | | |
| Polyol 3 | | | | | 5 | | | |
| Polyol 7 | | | | | | 5 | | |
| Polyol 14 | | | | | | | 5 | |
| Polyol 18 | | | | | | | | 5 |
| Dipropylenglykol | 20,25 | 20,25 | 20,25 | 20,25 | 20,25 | 20,25 | 20,25 | 20,25 |
| Ethylenglykol | 3,3 | 3,3 | 3,3 | 3,3 | 3,3 | 3,3 | 3,3 | 3,3 |
| Stabilisator 6 | 3,12 | 3,12 | 3,12 | 3,62 | 3,12 | 3,12 | 3,12 | 3,12 |
| Katalysator 2 | 0,32 | 0,32 | 0,32 | 0,32 | 0,32 | 0,32 | 0,32 | 0,32 |
| Katalysator 7 | 2,93 | 2,93 | 2,93 | 2,93 | 2,93 | 2,93 | 2,93 | 2,93 |
| Wasser | 0,47 | 0,47 | 0,47 | 0,47 | 0,47 | 0,47 | 0,47 | 0,47 |
| Cyclopentan | 17 | 17 | 17 | 17 | 17 | 17 | 17 | 17 |
| Phasenstabilität Polyol [23°] | Nach 2 Wochen keine Entmischung | Nach 1 Stunde entmischt | Nach 1 Stunde entmischt | Nach 1 Stunde entmischt | Nach 1 Stunde entmischt | Nach 2 Wochen keine Entmischung | Nach 2 Wochen keine Entmischung | Nach 1 Stunde entmischt |
| Mischungsverhältnis 100: | 300 | 300 | 300 | 300 | 300 | 300 | 300 | 300 |
| Startzeit | 18 | 16 | 17 | 19 | 18 | 18 | 17 | 18 |
| Abbindezeit | 30 | 28 | 30 | 30 | 29 | 30 | 30 | 28 |
| Rohdichte | 69 | 68 | 70 | 70 | 69 | 70 | 71 | 69 |
| Elementdicke [mm] | 80 | 80 | 80 | 80 | 80 | 80 | 80 | 80 |
| Offenzelligkeit [%] | 7 | 6 | 7 | 9 | 5 | 5 | 6 | 7 |
| Brandverhalten (DIN 4102) | B3 | B3 | B3 | B3 | B3 | B3 | B3 | B3 |
| Aushärtung am Bandende | 3 | 2 | 1-2 | 2 | 1-2 | 1-2 | 1-2 | 1-2 |
| Lunkerhäufigkeit | 3 | 2 | 1-2 | 2 | 1-1 | 1-2 | 1-2 | 1-2 |
| Schaumstruktur | 2 | 2 | 2 | 2 | 2 | 2 | 2 | 2 |

### Eingesetzte Rohstoffe:

Macromer 1: Monofumarat-Ester, ε' (23°C, 1000 Hz) = 5,54, bei dem die zweite Säuregruppe mit Propylenoxid umgesetzt wurde, ausgehend von einem Polyetheralkohol auf Basis Glycerin, Propylenoxid, Ethylenoxid; Hydroxylzahl Basispolyol: 25 mg KOH/g.
Macromer 2: 3-Isopropenyl-alpha,alpha-dimethylbenzyl-Isocyanat (TMI)-Addukt eines Polyetheralkohols, ε' (23°C, 1000 Hz) = 5,72, auf Basis Sorbitol, Propylenoxid, ca. 15 % Ethylenoxid; Hydroxylzahl Basispolyol: 18 mg KOH/g.
Macromer 3: 3-Isopropenyl-alpha,alpha-dimethylbenzyl-isocyanat (TMI)-Addukt eines Polyetheralkohols, ε' (23°C, 1000 Hz) = 5,83, auf Basis Sorbitol, Propylenoxid, ca. 20 % Ethylenoxid; Hydroxylzahl Basispolyol: 18 mg KOH/g.
Macromer 4: 3-Isopropenyl-alpha,alpha-dimethylbenzyl-isocyanat (TMI)-Addukt eines Polyetheralkohols, ε' (23°C, 1000 Hz) = 7,87, auf Basis Glycerin, Propylenoxid, ca. 73 % Ethylenoxid; Hydroxylzahl Basispolyol: 42 mg KOH/g.
Macromer 5: 3-Isopropenyl-alpha,alpha-dimethylbenzyl-isocyanat (TMI)-Addukt eines Polyetheralkohols, ε' (23°C, 1000 Hz) = 8,31, auf Basis Trimethylolpropan, Propylenoxid, ca. 74 % Ethylenoxid, dessen mit Isocyanaten reaktive Wasserstoffatome vor der Reaktion mit TMI zum Teil mit TDI umgesetzt wurden; Hydroxylzahl Basispolyol: 24 mg KOH/g.
Macromer 6: 3-Isopropenyl-alpha,alpha-dimethylbenzyl-isocyanat (TMI)-Addukt eines Polyetheralkohols, ε' (23°C, 1000 Hz) = 8,17, auf Basis Glycerin, Propylenoxid, ca. 73 % Ethylenoxid, dessen mit Isocyanaten reaktive Wasserstoffatome vor der Reaktion mit TMI zum Teil mit TDI umgesetzt wurden; Hydroxylzahl Basispolyol: 42 mg KOH/g.
Macromer 7: Monofumarat-Ester, ε' (23°C, 1000 Hz) = 5,64, bei dem die zweite Säuregruppe mit Propylenoxid umgesetzt wurde, ausgehend von einem Polyetheralkohol auf Basis Trimethylolpropan, Propylenoxid, Ethylenoxid; Hydroxylzahl Basispolyol: 27 mg KOH/g.
Macromer 8: 3-Isopropenyl-alpha,alpha-dimethylbenzyl-isocyanat (TMI)-Addukt eines Polyetheralkohols, ε' (23°C, 1000 Hz) = 5,75, auf Basis Sorbitol, Propylenoxid, ca. 25 % Ethylenoxid; Hydroxylzahl Basispolyol: 18 mg KOH/g.
Macromer 9: 3-Isopropenyl-alpha,alpha-dimethylbenzyl-isocyanat (TMI)-Addukt eines Polyetheralkohols, ε' (23°C, 1000 Hz) = 5,42, auf Basis Sorbitol, Propylenoxid, ca. 22 % Ethylenoxid; Hydroxylzahl Basispolyol: 18 mg KOH/g.
Macromer 10: 3-Isopropenyl-alpha,alpha-dimethylbenzyl-isocyanat (TMI)-Addukt eines Polyesteralkohols, ε' (23°C, 1000 Hz) = 7,47, auf Basis Adipinsäure und Ethylenglykol; Hydroxylzahl Basispolyol: 55 mg KOH/g.

Polyol 1: Graftpolyol mit einer Hydroxylzahl von 88 mgKOH/g, einem Feststoffgehalt von 45 Gew.-% und einer Viskosität bei 25°C von 4900 mPa·s, ε' (23°C, 1000 Hz) = 4,89, hergestellt durch in situ Polymerisation Acrylnitril und Styrol in einem Masseverhältnis von 1:2 in einem Trägerpolyol auf Basis von Trimethylolpropan, Propylenoxid, Hydroxylzahl: 160 mgKOH/g.

Polyol 2: Graftpolyol mit einer Hydroxylzahl von 88 mgKOH/g, einem Feststoffgehalt von 45 Gew.-% und einer Viskosität bei 25°C von 3800 mPa·s, ε' (23°C, 1000 Hz) = 4,94, hergestellt durch in situ Polymerisation Acrylnitril und Styrol in einem Masseverhältnis von 1:2 in einem Trägerpolyol auf Basis von Trimethylolpropan, Propylenoxid, Hydroxylzahl: 160 mgKOH/g.

Polyol 3: Graftpolyol mit einer Hydroxylzahl von 88 mgKOH/g, einem Feststoffgehalt von 45 Gew.-% und einer Viskosität bei 25°C von 3900 mPa·s, e' (23°C, 1000 Hz) = 5,04, hergestellt durch in situ Polymerisation Acrylnitril und Styrol in einem Masseverhältnis von 1:2 in einem Trägerpolyol auf Basis von Trimethylolpropan, Propylenoxid, Hydroxylzahl: 160 mgKOH/g.

Polyol 4: Graftpolyol mit einer Hydroxylzahl von 88 mgKOH/g, einem Feststoffgehalt von 45 Gew.-% und einer Viskosität bei 25°C von 5800 mPa·s, ε' (23°C, 1000 Hz) = 5,41, hergestellt durch in situ Polymerisation Acrylnitril und Styrol in einem Masseverhältnis von 1:2 in einem Trägerpolyol auf Basis von Trimethylolpropan, Propylenoxid, Hydroxylzahl: 160 mgKOH/g.

Polyol 5: Graftpolyol mit einer Hydroxylzahl von 88 mgKOH/g, einem Feststoffgehalt von 45 Gew.-% und einer Viskosität bei 25°C von 3600 mPa·s, ε' (23°C, 1000 Hz) = 6,31, hergestellt durch in situ Polymerisation Acrylnitril und Styrol in einem Masseverhältnis von 1:2 in einem Trägerpolyol auf Basis von Glycerin, Propylenoxid und ca. 7 bis 8 % Ethylenoxid: 160 mgKOH/g.

Polyol 6: Graftpolyol mit einer Hydroxylzahl von 35 mgKOH/g, einem Feststoffgehalt von 45 Gew.-% und einer Viskosität bei 25°C von 3200 mPa·s, ε' (23°C, 1000 Hz) = 6,03, hergestellt durch in situ Polymerisation Acrylnitril und Styrol in einem Masseverhältnis von 1:2 in einem Trägerpolyol auf Basis von Dipropylenglykol, Propylenoxid und ca. 25 % Ethylenoxid, Hydroxylzahl: 63 mgKOH/g.

Polyol 7: Graftpolyol mit einer Hydroxylzahl von 23 mgKOH/g, einem Feststoffgehalt von 45 Gew.-% und einer Viskosität bei 25°C von 4900 mPa·s, ε' (23°C, 1000 Hz) = 6,14, hergestellt durch in situ Polymerisation Acrylnitril und Styrol in einem Masseverhältnis von 1:2 in einem Trägerpolyol auf Basis von Glycerin, Propylenoxid, ca. 73 % Ethylenoxid, Hydroxylzahl: 42 mgKOH/g.

Polyol 8: Polyetheralkohol auf Basis von Trimethylolpropan, Propylenoxid, Hydroxylzahl: 160 mgKOH/g, ε' (23°C, 1000 Hz) = 7,37.

Polyol 9: Polyetheralkohol auf Basis von Glycerin, Propylenoxid und Ethylenoxid, Hydroxylzahl: 160 mgKOH/g, ε' (23°C, 1000 Hz) = 8,10.

Polyol 10: Polyetheralkohol auf Basis von Dipropylenglykol, Propylenoxid und Ethylenoxid, Hydroxylzahl: 63 mgKOH/g, e' (23°C, 1000 Hz) = 9,83.

Polyol 11: Polyetheralkohol auf Basis von Glycerin, Propylenoxid, Ethylenoxid, Hydroxylzahl: 42 mgKOH/g, ε' (23°C, 1000 Hz) = 8,27.

Polyol 12: Graftpolyol mit einer Hydroxylzahl von 114 mgKOH/g, einem Feststoffgehalt von 40 Gew.-% und einer Viskosität bei 25°C von 30000 mPa·s, e' (23°C, 1000 Hz) = 6,89, hergestellt durch in situ Polymerisation Acrylnitril und Styrol in einem Masseverhältnis von 1:2 in einem Trägerpolyol auf Basis von Polyethylenglykol, Hydroxylzahl: 190 mgKOH/g.

Polyol 13: Graftpolyol mit einer Hydroxylzahl von 35 mgKOH/g, einem Feststoffgehalt von 35 Gew.-% und einer Viskosität bei 25°C von 35000 mPa·s, ε' (23°C, 1000 Hz) = 6.38, hergestellt durch in situ Polymerisation Acrylnitril und Styrol in einem Masseverhältnis von 1:2 in einem Trägerpolyol auf Basis von Dipropylenglykol, Propylenoxid, Ethylenoxid, ca. 25 % Ethylenoxid, Hydroxylzahl: 63 mgKOH/g.

Polyol 14: Graftpolyol mit einer Hydroxylzahl von 16 mgKOH/g, einem Feststoffgehalt von 35 Gew.-% und einer Viskosität bei 25°C von 5000 mPa·s, ε' (23°C, 1000 Hz) = 6,46, hergestellt durch in situ Polymerisation Acrylnitril und Styrol in einem Masseverhältnis von 1:2 in einem Trägerpolyol auf Basis von Trimethylolpropan, Propylenoxid, Ethylenoxid, ca. 75 % Ethylenoxid Hydroxylzahl: 24 mgKOH/g.

Polyol 15: Graftpolyol mit einer Hydroxylzahl von 27 mgKOH/g, einem Feststoffgehalt von 35 Gew.-% und einer Viskosität bei 25°C von 6600 mPa·s, e' (23°C, 1000 Hz) = 6,40, hergestellt durch in situ Polymerisation Acrylnitril und Styrol in einem Masseverhältnis von 1:2 in einem Trägerpolyol auf Basis von Glycerin, Propylenoxid, ca. 73 % Ethylenoxid, Hydroxylzahl: 42 mgKOH/g.

Polyol 16: Graftpolyol mit einer Hydroxylzahl von 27 mgKOH/g, einem Feststoffgehalt von 35 Gew.-% und einer Viskosität bei 25°C von 8900 mPa·s, ε' (23°C, 1000 Hz) = 6,78, hergestellt durch in situ Polymerisation Acrylnitril und Styrol in einem Masseverhältnis von 1:2 in einem Trägerpolyol auf Basis von Glycerin, Propylenoxid, ca. 73 % Ethylenoxid, Hydroxylzahl: 42 mgKOH/g.

Polyol 17: Graftpolyol mit einer Hydroxylzahl von 23 mgKOH/g, einem Feststoffgehalt von 45 Gew.-% und einer Viskosität bei 25 °C von 40000 mPa·s, ε' (23°C, 1000 Hz) = 6,59, hergestellt durch in situ Polymerisation Acrylnitril und Styrol in einem Masseverhältnis von 1:2 in einem Trägerpolyol auf Basis von Glycerin, Propylenoxid, ca. 73 % Ethylenoxid, Molekulargewicht M_{w} = 3500 g/mol.

Polyol 18: Graftpolyol mit einer Hydroxylzahl von 14 mgKOH/g, einem Feststoffgehalt von 45 Gew.-% und einer Viskosität bei 25°C von 17400 mPa·s, ε' (23°C, 1000 Hz) = 6,78, hergestellt durch in situ Polymerisation Acrylnitril und Styrol in einem Masseverhältnis von 1:2 in einem Trägerpolyol auf Basis von Sorbitol, Propylenoxid, ca. 10 % Ethylenoxid, Hydroxylzahl: 26 mgKOH/g, ε' (23°C, 1000 Hz) = 4,86.

Polyol 19: Graftpolyol mit einer Hydroxylzahl von 133 mgKOH/g, einem Feststoffgehalt von 35 Gew.-% und einer Viskosität bei 25 °C von 2500 mPa.s, ε' (23°C, 1000 Hz) = 5.98, hergestellt durch in situ Polymerisation Acrylnitril und Styrol in einem Masseverhältnis von 1:2 in einem Trägerpolyolgemisch (1:1) auf Basis von Trimethylolpropan und Propylenoxid; Hydroxylzahl: 160 mgKOH/g, Molekulargewicht M_{w} = 1000 g/mol und basierend auf Trimethylolpropan und Ethylenoxid, Hydroxylzahl 250 mgKOH/g.

Polyol 20: Polyethylenglykol, Hydroxylzahl 190 mgKOH/g, ε' (23°C, 1000 Hz) = 7,06.

Polyol 21: Polyetheralkohol auf Basis von Trimethylolpropan, Propylenoxid, ca. 74 % Ethylenoxid, Hydroxylzahl: 24 mgKOH/g, ε' (23°C, 1000 Hz) = 7,15.

Polyol 22: Polyetheralkohol auf Basis von Sorbitol, Propylenoxid und Ethylenoxid, ca. 10 % Ethylenoxid, Hydroxylzahl: 26 mgKOH/g, ε' (23°C, 1000 Hz) = 7,34.

Polyol 23: Polyetheralkohol auf Basis von Trimethylolpropan, Propylenoxid, Hydroxylzahl: 160 mgKOH/g, ε' (23°C, 1000 Hz) = 6,80.

Polyol 24: Graftpolyol mit einer Hydroxylzahl von 28 mgKOH/g, einem Feststoffgehalt von 41 Gew.-% und einer Viskosität bei 25°C von 4500 mPa·s, ε' (23°C, 1000 Hz) = 4,41, hergestellt durch in situ Polymerisation Acrylnitril und Styrol in einem Masseverhältnis von 1:2 in einem Trägerpolyol auf Basis von Glycerin, Ethylenoxid und Propylenoxid, ca. 11 % Ethylenoxid, Hydroxylzahl: 48 mgKOH/g.

Polyol 25: Graftpolyol mit einer Hydroxylzahl von 19 mgKOH/g, einem Feststoffgehalt von 45 Gew.-% und einer Viskosität bei 25°C von 7300 mPa·s, e' (23°C, 1000 Hz) = 4,63, hergestellt durch in situ Polymerisation Acrylnitril und Styrol in einem Masseverhältnis von 1:2 in einem Trägerpolyol auf Basis von Glycerin und Propylenoxid, ca. 14 % Ethylenoxid, Hydroxylzahl: 35 mgKOH/g.

Polyol 26: Graftpolyol mit einer Hydroxylzahl von 31 mgKOH/g, einem Feststoffgehalt von 45 Gew.-% und einer Viskosität bei 25°C von 4600 mPa·s, e' (23°C, 1000 Hz) = 4,59, hergestellt durch in situ Polymerisation Acrylnitril und Styrol in einem Masseverhältnis von 1:2 in einem Trägerpolyol auf Basis von Glycerin und Propylenoxid, ca. 11 % Etyhlenoxid; Hydroxylzahl: 56 mgKOH/g.

Polyol 27: Graftpolyol mit einer Hydroxylzahl von 133 mgKOH/g, einem Feststoffgehalt von 35 Gew.-% und einer Viskosität bei 25°C von 30000 mPa.s, ε' (23°C, 1000 Hz) = 5,89, hergestellt durch in situ Polymerisation Acrylnitril und Styrol in einem Masseverhältnis von 1:2 in einem Trägerpolyolgemisch (1:1) auf Basis von Trimethylolpropan und Propylenoxid; Hydroxylzahl: 160 mgKOH/g, Molekulargewicht M_{w} = 1000 g/mol und basieren auf Trimethylolpropan und Ethylenoxid, Hydroxylzahl 250 mgKOH/g.

Polyol 28: Polyetheralkohol auf Basis von Glycerin, Propylenoxid, Hydroxylzahl: 35 mgKOH/g, ε' (23°C, 1000 Hz) = 12.22.

Polyol 29: Polyetheralkohol auf Basis von Glycerin, Propylenoxid, Hydroxylzahl: 56 mgKOH/g, e' (23°C, 1000 Hz) = 9.87.

Polyol 30: Graftpolyol mit einer Hydroxylzahl von 31 mgKOH/g, einem Feststoffgehalt von 44 Gew.-% und einer Viskosität bei 25°C von 4500 mPa.s, ε' (23°C, 1000 Hz) = 4,48, hergestellt durch in situ Polymerisation Acrylnitril und Styrol in einem Masseverhältnis von 1:2 in einem Trägerpolyol auf Basis von Glycerin, Propylenoxid, ca. 14 % Etyhlenoxid; Hydroxylzahl: 56 mgKOH/g.

Polyol 40: Polyetheralkohol auf Basis von Sorbit, Propylenoxid, Hydroxylzahl: 500 mgKOH/g.

Polyol 41: Polyetheralkohol auf Basis von Saccharose, Pentaerythrit, Diethylenglykol und Propylenoxid, Hydroxylzahl: 400 mgKOH/g.

Polyol 42: Polyetheralkohol aus vicinalem Toluylendiamin, Ethylenoxid und Propylenoxid, Hydroxylzahl: 400 mgKOH/g.

Polyol 43: Polyetheralkohol auf Basis von Saccharose, Glycerin und Propylenoxid, Hydroxylzahl: 450 mgKOH/g.

Polyol 44: Polyetheralkohol auf Basis von Trimethylolpropan und Propylenoxid, Hydroxylzahl: 160 mgKOH/g.

Polyol 45: Polyetheralkohol auf Basis von vicinalem Toluylendiamin, Ethylenoxid und Propylenoxid, Hydroxylzahl: 160 mgKOH/.g

Polyol 46: Polyetheralkohol auf Basis von Saccharose, Glycerin und Propylenoxid, Hydroxylzahl: 490 mgKOH/g.

Polyol 47: Polyetheralkohol auf Basis von Saccharose, Diethylenglykol und Propylenoxid, Hydroxylzahl: 440 mgKOH/g.

Polyol 48: Polyetheralkohol auf Basis von Propylenglykol und Propylenoxid, Hydroxylzahl: 105 mgKOH/g.

Polyol 49: Polyetheralkohol auf Basis von Sorbitol und Propylenoxid, Hydroxylzahl: 340 mgKOH/g.

Polyol 50: Polyesteralkohol auf Basis technische Dimerfettsäure, Glycerol, Hydroxylzahl: 400 mgKOH/g.

Polyol 51: Polyetheralkohol auf Basis von Ethylendiamin und Propylenoxid, Hydroxylzahl: 770 mgKOH/g.

Polyol 52: Polyetheralkohol auf Basis von Propylenglykol und Propylenoxid, Hydroxylzahl: 250 mgKOH/g

Polyol 53: Polyestheralkohol hergestellt aus Adipinsäure, Phthalsäureanhydrid, Ölsäure und 1,1,1-Trimethylolpropan, Hydroxylzahl 385 mgKOH/g.
Flammschutzmittel 1: Trischlorpropylphosphat
Flammschutzmittel 2: Diethylethanphosphonat
Flammschutzmittel 3: Ixol® B251, Solvay AG

Stabilisator 1 Tegostab® B8467, Degussa AG
Stabilisator 2: Tegostab® B8461, Degussa AG
Stabilisator 3: OS340, Bayer AG
Stabilisator 4: Tegostab® B8466, Degussa AG
Stabilisator 5: Dabco® DC5103, Air Products
Stabilisator 6: 1:1-Gemisch aus Tegostab®B8461 und Tegostab®B8409, Degussa AG

Katalysator 1: N,N-Dimethylcyclohexylamin
Katalysator 2: Lupragen® N301, BASF Aktiengesellschaft
Katalysator 3: Dabco® T, Air Products
Katalysator 4: Lupragen® N600, BASF Aktiengesellschaft
Katalysator 5: Polycat 5, Air Products
Katalysator 6: KX315, Elastogran GmbH
Katalysator 7: 47%ige Lösung von Kaliumacetat in Ethylenglykol
Initiator 1: Wako ® V 601, Wako Chemicals GmbH

## Patentansprüche

1. Graftpolyole, herstellbar durch in situ Polymerisation von olefinisch ungesättigten Monomeren in einem Trägerpolyol in Anwesenheit eines Makromers mit mindestens einer olefinisch ungesättigten Gruppe im Molekül, **dadurch gekennzeichnet, dass** das Trägerpolyol eine Funktionalität von 2 bis 8, eine Hydroxylzahl im Bereich zwischen 100 und 800 mgKOH/g und einen Gehalt an Ethylenoxideinheiten in der Polyetherkette von mindestens 30 Gew.-%, bezogen auf bezogen auf das Molekulargewicht des Polyols, aufweist.

2. Verfahren zur Herstellung von Polyurethan-Schaumstoffen durch Umsetzung von
a) Polyisocyanaten mit
b) Verbindungen mit mindestens zwei mit Isocyanatgruppen reaktiven Wasserstoffatomen in Gegenwart von
c) Katalysatoren
d) Treibmitteln,
e) gegebenenfalls Hilfsmittel und Zusatzstoffen,
**dadurch gekennzeichnet, dass** die Verbindungen mit mindestens zwei mit Isocyanatgruppen reaktiven Wasserstoffatomen mindestens ein Graftpolyol nach Anspruch 1 enthalten.

3. Verfahren nach Anspruch 2, **dadurch gekennzeichnet, dass** die Graftpolyole in einer Menge von bis zu 100 Gew.-%, bezogen auf die Komponente b, eingesetzt werden.

4. Verfahren nach Anspruch 2, **dadurch gekennzeichnet, dass** die Graftpolyole in einer Menge von 0,5 bis 70 Gew.-%, jeweils bezogen auf die Komponente b, eingesetzt werden.

5. Verfahren nach Anspruch 2, **dadurch gekennzeichnet, dass** die Graftpolyole bei der Herstellung von geschlossenzelligen Polyurethan-Hartschaumstoffen für den Einsatz in Kühlgeräten in einer Menge von 3 bis 70 Gew.-%, bezogen auf die Komponente b, eingesetzt werden.

6. Verfahren nach Anspruch 2, **dadurch gekennzeichnet, dass** die Graftpolyole bei der Herstellung von geschlossenzelligen Polyurethan-Hartschaumstoffen für den Einsatz in Sandwich-Elementen in einer Menge von 0,5 bis 35 Gew.-%, bezogen auf die Komponente b, eingesetzt werden.

7. Verfahren nach Anspruch 2, **dadurch gekennzeichnet, dass** die Graftpolyole durch in situ Polymerisation von ethylenisch ungesättigten Monomeren in Polyetheralkoholen mit einer Hydroxylzahl im Bereich zwischen 100 und 800 mgKOH/g hergestellt werden, die durch Anlagerung von Alkylenoxiden an H-funktionelle Startsubstanzen erhältlich sind, wobei die Startsubstanzen ausgewählt sind aus der Gruppe, enthaltend mehrfunktionelle Alkohole, Zuckeralkohole, aliphatische Amine und aromatische Amine.

8. Verfahren nach Anspruch 2, **dadurch gekennzeichnet, dass** die Graftpolyole unter Verwendung von polaren ethylenisch ungesättigten Makromeren mit einer Dielektrizitätskonstante ε̃ nach DIN 53483 von größer 6,0 bei 23°C und und 1000 Hz hergestellt werden.

9. Verfahren nach Anspruch 2, **dadurch gekennzeichnet, dass** die Verteilung der Graftpolyolpartikel ein Maximum zwischen 0,1 µm bis 8 µm aufweist, bevorzugt sind 0,2 bis 3 µm.

10. Verfahren nach Anspruch 2, **dadurch gekennzeichnet, dass** die Graftpolyole eine deutlich separierte bimodale Teilchengröße der Polymere aufweisen.

## Claims

1. A graft polyol which can be prepared by in-situ polymerization of olefinically unsaturated monomers in a carrier polyol in the presence of a macromer having at least one olefinically unsaturated group in the molecule, wherein the carrier polyol has a functionality of from 2 to 8, a hydroxyl number in the range from 100 to 800 mg KOH/g and a content of ethylene oxide units in the polyether chain of at least 30% by weight, based on the molecular weight of the polyol.

2. A process for producing polyurethane foams by reacting
a) polyisocyanates with
b) compounds having at least two hydrogen atoms which are reactive toward isocyanate groups in the presence of
c) catalysts,
d) blowing agents,
e) optionally auxiliaries and additives,
wherein the compounds having at least two hydrogen atoms which are reactive toward isocyanate groups comprise at least one graft polyol according to claim 1.

3. The process according to claim 2, wherein the graft polyols are used in an amount of up to 100% by weight, based on the component b.

4. The process according to claim 2, wherein the graft polyols are used in an amount of from 0.5 to 70% by weight, in each case based on the component b.

5. The process according to claim 2, wherein the graft polyols are used in the production of closed-celled rigid polyurethane foams for use in refrigeration appliances in an amount of from 3 to 70% by weight, based on the component b,

6. The process according to claim 2, wherein the graft polyols are used in the production of closed-celled rigid polyurethane foams for use in sandwich elements in an amount of from 0.5 to 35% by weight, based on the component b.

7. The process according to claim 2, wherein the graft polyols are prepared by in-situ polymerization of ethylenically unsaturated monomers in polyether alcohols which have a hydroxyl number in the range from 100 to 800 mg KOH/g and are obtainable by addition of alkylene oxides onto H-functional starter substances selected from the group consisting of polyfunctional alcohols, sugar alcohols, aliphatic amines and aromatic amines.

8. The process according to claim 2, wherein the graft polyols are prepared using polar ethylenically unsaturated macromers having a dielectric constant ε̃ according to DIN 53483 of greater than 6.0 at 23°C and 1000 Hz.

9. The process according to claim 2, wherein the distribution of the graft polyol particles has a maximum in the range from 0.1 µm to 8 µm, preferably from 0.2 to 3 µm.

10. The process according to claim 2, wherein the graft polyols have a clearly separated bimodal particle size of the polymers.

## Revendications

1. Polyols greffés pouvant être fabriqués par polymérisation *in situ* de monomères insaturés oléfiniquement dans un polyol vecteur en présence d'un macromère comportant au moins un groupe insaturé oléfiniqument dans la molécule, **caractérisés en ce que** le polyol vecteur présente une fonctionnalité de 2 à 8, un indice d'hydroxyle dans la plage allant de 100 à 800 mgKOH/g et une teneur en unités d'oxyde d'éthylène dans la chaîne polyéther d'au moins 30 % en poids, par rapport au poids moléculaire du polyol.

2. Procédé de fabrication de mousses de polyuréthane par la réfaction de :
a) polyisocyanates avec
b) des composés ayant au moins deux atomes d'hydrogène réactifs avec des groupes isocyanate en présence
c) de catalyseurs,
d) d'agents gonflants,
e) éventuellement d'adjuvants et d'additifs,
**caractérisé en ce que** les composés ayant au moins deux atomes d'hydrogène réactifs avec des groupes isocyanate contiennent au moins un polyol greffé selon la revendication 1.

3. Procédé selon la revendication 2, **caractérisé en ce que** les polyols greffés sont utilisés en une quantité allant jusqu'à 100 % en poids, par rapport au composant b.

4. Procédé selon la revendication 2, **caractérisé en ce que** les polyols greffés sont utilisés en une quantité allant de 0,5 à 70 % en poids, respectivement par rapport au composant b.

5. Procédé selon la revendication 2, **caractérisé en ce que** les polyols greffés sont utilisés lors de la fabrication de mousses dures de polyuréthane à cellules fermées pour l'introduction dans des appareils frigorifiques en une quantité de 3 à 70 % en poids, par rapport au composant b.

6. Procédé selon la revendication 2, **caractérisé en ce que** les polyols greffés sont utilisés lors de la fabrication de mousses dures de polyuréthane à cellules fermées pour l'introduction dans des éléments sandwich en une quantité allant de 0,5 à 35 % en poids, par rapport au composant b.

7. Procédé selon la revendication 2, **caractérisé en ce que** les polyols greffés sont fabriqués par polymérisation *in situ* de monomères insaturés éthyléniquement dans des alcools polyétheriques ayant un indice d'hydroxyle dans la plage comprise entre 100 et 800 mgKOH/g, pouvant être obtenus par addition d'oxydes d'alkylène sur des substances de départ H-fonctionnelles, les substances de départ étant choisies parmi le groupe contenant les alcools multifonctionnels, les alcools de sucre, les amines alphatiques et les amines aromatiques.

8. Procédé selon la revendication 2, **caractérisé en ce que** les polyols greffés sont fabriqués en utilisant des macromères insaturés éthyléniquement polaires présentant une constante de diélectricité ε̃ selon la norme DIN 53483 de plus de 6,0 à 23 °C et de 1000 Hz.

9. Procédé selon la revendication 2, **caractérisé en ce que** la distribution de la particule de polyol greffé présente une valeur maximale comprise entre 0,1 µm et 8 µm, de préférence 0,2 et 3 µm.

10. Procédé selon la revendication 2, **caractérisé en ce que** les polyols greffés présentent une grandeur de la particule des polymères bimodale clairement séparée.
